# EUROPÄISCHE PATENTSCHRIFT

(11) **EP 1 037 771 B1**
(45) Veröffentlichungstag und Bekanntmachung des Hinweises auf die Patenterteilung: **13.03.2002**
(21) Anmeldenummer: 98962229.5
(22) Anmeldetag: 10.11.1998
(51) Int. Cl.: B60R 21/02

(54) **RÜCKHALTEVORRICHTUNG MIT SCHULTERHALTER IN BEFÖRDERUNGSMITTELN**
RETAINER DEVICE WITH SHOULDER ARRESTER FOR TRANSPORT SYSTEMS
DISPOSITIF DE RETENUE AVEC ENSEMBLE RETENANT LES EPAULES POUR MOYENS DE TRANSPORT

(30) Priorität: 11.11.1997 DE 19758498
(43) Veröffentlichungstag der Anmeldung: 27.09.2000
(73) Patentinhaber: Go, Giok Djien, Dr.-Ing., 65510 Idstein (DE)
(72) Erfinder: Go, Giok Djien, Dr.-Ing., 65510 Idstein (DE)
(86) Internationale Anmeldenummer: DE9803271
(87) Internationale Veröffentlichungsnummer: WO9924292

(56) Entgegenhaltungen:
- EP-A- 0 003 354
- DE-A- 2 151 146
- US-A- 2 833 554
- US-A- 3 392 989
- US-A- 3 713 694
- US-A- 3 901 550

## Beschreibung

Die Erfindung betrifft einen Schulter- und Halshalter zur Erhöhung des Insassenschutzes für Transportmittel (Kraftfahrzeuge, Rennwagen, Renn-, Schnellboote, Züge und Flugzeuge), insbesondere zum sicheren Zurückhalten des Oberkörpers eines angeschnallten Insassen bei beliebigem Aufprall eines Kraftfahrzeuges, Rennwagens, Zuges, Bootes oder Flugzeuges auf ein Hindernis oder bei turbulenzbedingtem Schütteln eines Flugzeuges.

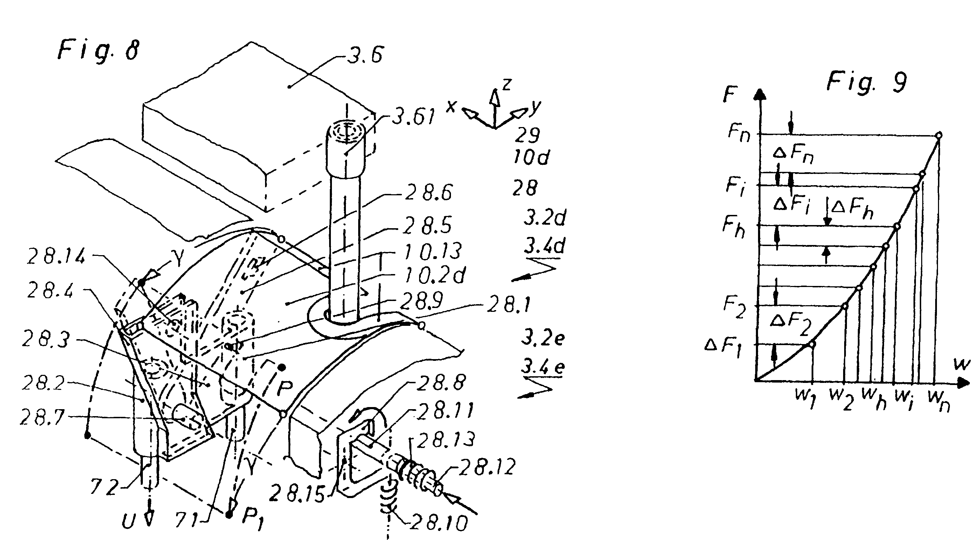

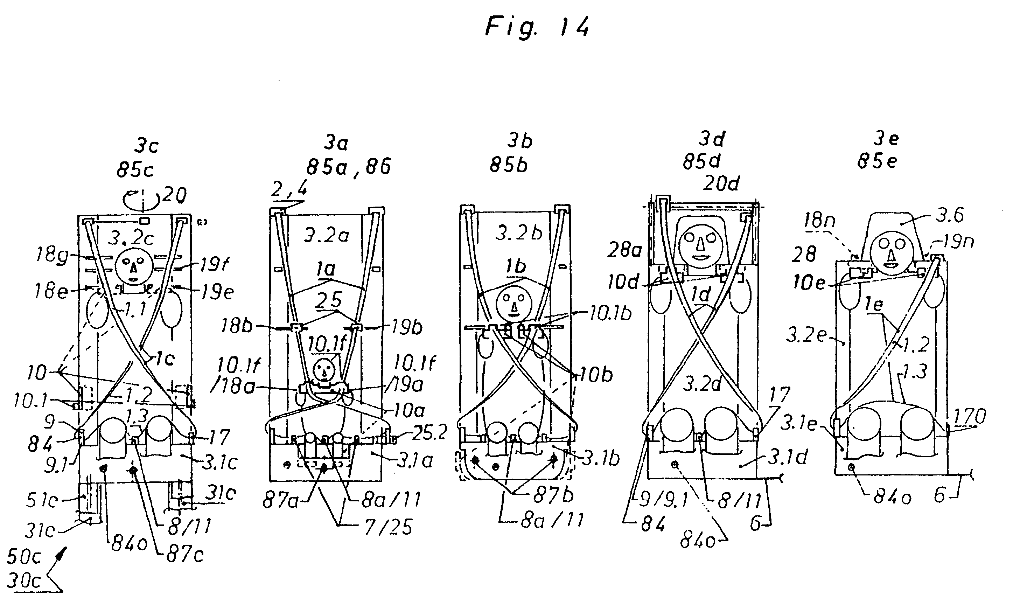

Zwecks Vereinfachung der Formulierung werden "*folgende Begriffe"* für die exakten Bezeichnungen eingeführt:
"*Gurtabschnitte **1.1, 1.2, 1.3** und **1.4"*** für Teile eines Multipunkt-Sicherheitsgurtes **1, 1a bis 1d** zur X-förmigen Rückhalterung des Oberkörpers und zur Rückhalterung des Unterkörpers gemäß EP-B- 1 037 773 (DE-C- 197 49 780, WO 99/24294) (**Fig.** 1, 14).
*"Gurtabschnitte* ***1.2, 1.3*** *und* ***1.4***" für Teile eines herkömmlichen Dreipunkt-Sicherheitsgurtes **1e** zur Λ-förmigen Rückhalterung des Oberkörpers und zur Rückhalterung des Unterkörpers (**Fig.** 14);
*"Gurtabschnitt **1.3*** " für herkömmlichen Zweipunkt-Sicherheitsgurt oder Beckengurt;
*"Boden **6"*** für Kraftfahrzeug, Zug, Boot oder Flugzeugboden (**Fig.** 14);
*"Unfall"* eines Kraftfahrzeuges, Zuges, Bootes oder Flugzeuges für Front-, Seiten-, Heckaufprall und/oder Überschlagen eines Kraftfahrzeuges oder für Massenkarambolage, Boot-, Zug-, Flugzeugunfall oder turbulenzbedingtes Schütteln eines Flugzeuges;
*"Abbau der Energie"* oder "*Energieabsorption*" für Absorption und Freisetzen der Energie sowie Dämpfung der Schwingung;
"*ungedämpfte Energieabsorption"* für Absorption und Freisetzen der Energie ohne Dämpfung der Schwingung; und
*"Energieabsorptionsverfahren"* für ein stufenweise oder in Zyklen ausgelegtes Verfahren zum Abbau der Teilenergien "ΔFᵢ", wobei i von 1 bis n zunimmt und die Summation aller Teilenergien die Gesamtenergie "Fₙ" oder Gurtkraft (**Fig.** 9) ergibt, unterhalb der verletzungsbedingten Schwellwerte durch ungedämpfte Energieabsorption, Energieabsorption, Konservieren der Spann- sowie Reibkräfte der Leitspannelemente während des Freisetzens der Energie beim Bruch der Sollbruchstellen der Spannelemente und Energieabsorber, zwecks Sicherung der Überlebenschance und Aufrechterhalten der Rückhalterung unterhalb der Reißfestigkeit des Sicherheitsgurtes.

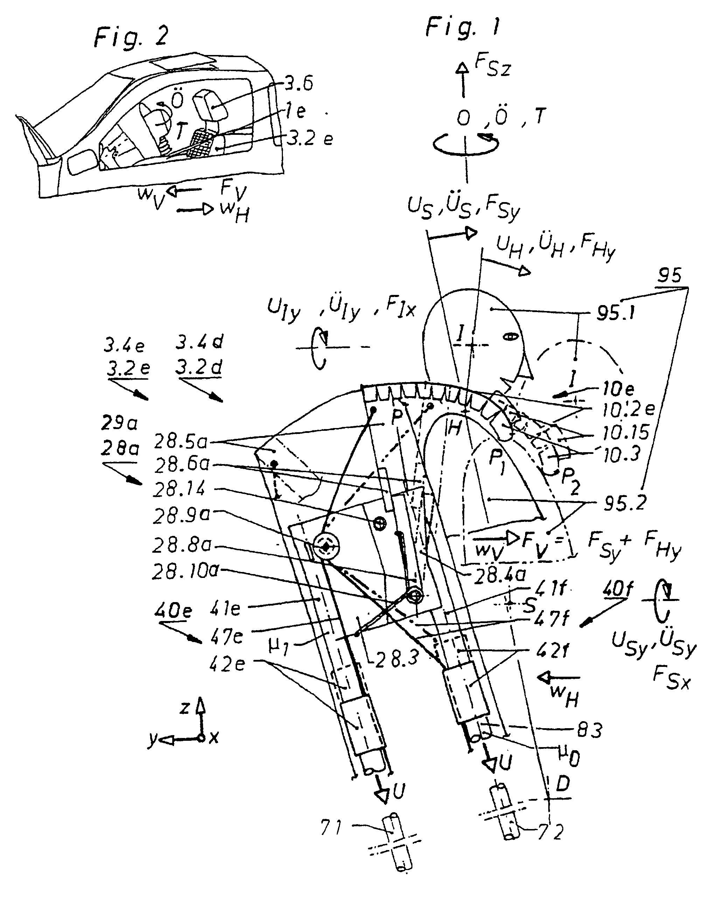

Es ist bekannt, daß im Fahrzeug, insbesondere Kraftfahrzeug, die Insassen durch Sicherheitsgurte vor einem Aufprall auf die Fahrzeugteile beim Unfall geschützt werden sollen, wobei vornehmlich eine, wenn auch geringe Vorverlagerung des Oberkörpers des Insassen bei geringer Geschwindigkeit hingenommen wird. Bereits beim Offset Crashtest mit einer Geschwindigkeit von 55 km/h werden die aus dem Oberkörper **95.2** und Kopf **95.1 (Fig.** 1 und 2) sich ergebenden Massen durch die aus Längs-, Quer-, Nick- und Gierbeschleunigungen hervorgerufenen Belastungen vorverlagert und verdreht.

In Zügen (Eisenbahn) sind Sicherheitsgurtsysteme für die Passagiere nicht anzutreffen, so daß sie von ihren Sitzen beim Unfall geschleudert werden können und oftmals schwere oder tödliche Verletzungen davontragen.

Auch in Flugzeugen erfolgt die Rückhalterung der Passagiere auf ihren Sitzen nur mit Hilfe der bekannten Beckengurte. Der Beckengurt sichert den Oberkörper und Kopf bei einem Aufprall, insbesondere bei plötzlichen Turbulenzen unzureichend. Daher sind in der Vergangenheit schwere/tödliche Verletzungen bereits registriert worden. In Zukunft vermehren sich die Verletzungen wegen Zunahme der Turbulenzen.

Bekannt sind die Rückhaltevorrichtungen gemäß US 2,833,554, US 3,392,989, US 3,713,694, US 3,901,550 (DE-A- 24 28 285), DE-A- 2151146 und EP-A- 0003354 (DE-A- 2803574). Als *Ersatz des Sicherheitsgurtes (Rückhaltesystems)* hält die Rückhaltevorrichtung beide Schultern und/oder den Becken zurück. Dadurch steht es im Widerspruch zur von Behörden weltweit erlassenen Vorschrift zum Angurten durch Sicherheitsgurte während der Fahrt. Gemäß dieser Vorschrift führt Polizei Kontrolle durch und sprechen Gerichte Urteile aus. Eine Produkteinführung bedeutet das Aus für den Automobilhersteller, da die Fahrzeuge nicht abgenommen werden.

Gemäß US 3,901,550 (DE-A- 24 28 285), deren Rückhaltevorrichtung die Brauchbarste unter allen o.g. Rückhaltevorrichtungen ist, wird der Insasse durch zwei Paare luftgepolsterte Schutzarme an den beiden Schultern und dem Becken 96 gesichert. Allerdings stellen folgende praxisbezogene Problemfälle die Überlebenschance und den Einsatz in Frage:
I. Ein Spiel zwischen der Schulter und dem Schulterhalter erlaubt die Pendelbewegung der Schultern und des Kopfes **95.1.** Hohe Verletzungsschwere ist die Folgen von
   1. hoher Kopfbeschleunigung von 83 g, gemessen an einem angegurteten Dummy beim Crashtest eines Fahrzeugs ohne Airbags,
   2. beschränktem Energieabsorptionsvermögen der Luftkammern zum Abbau großer Energie durch Brustbeschleunigung von 64 g, gemessen am weit vorverlagerten Oberkörper des angegurteten Dummies, und
   3. fehlendem Halslialter zum Abbau großer Energie des durch Gierbeschleunigung "Ö" bei Gierwinkel "O" verdrehten Kopfes als 2. Drehrnasse.

   Durch Submarining (Untertauchen des Körpers) beim Heckaufprall befreit sich der Insasse aus der Rückhalterung mittels der Schutzarme, mit der Folge schwerer oder tödlicher Verletzung.
   Beim Unfall, dessen Belastungsfälle aus **Fig.** 1 und 2 ersichtlich sind, ist die Überlebenschance wegen fehlendem Energieabsorber und Dämpfer gering.
II. Wegen der Bildung einer einzigen Außenkontur durch Zusammenziehen der Luftkammern der Schutzarme mittels eines Zugbandes läßt sich ein Oberkörper mit unterschiedlicher Außenkontur, z.B. durch Tragen von einem dicken Wintermantel, nicht sichern. Die Außenkontur ist eine Funktion von zwei Körperformen (beider Schultern und Brust/Busen) und von dem durch Kleidungswechsel veränderlichen Umfang des gekleideten Insassen.
III. Die Herstellungskosten zweier Paare Schutzarme mit zwei Halterzuführsystemen sind entscheidend höher als die des Schulter- und Halshalters mit Sicherheitsgurt.

Die DE 37 06 394 C1 beschreibt eine Rückenlehne eines Fahrzeugvordersitzes mit Verformungselementen, die durch Aufprallen
- eines Insassen gegen jene Rückenlehne bei einem Heckaufprall oder
- eines nicht angegurteten Fondinsassen gegen jene Rückenlehne bei einem Frontaufprall über die Elastizitätsgrenze hinaus zur ungedämpften Energieabsorption verformt werden. Die tragenden Teile des Rückenlehnenrahmens dienen als Verformungselemente, wobei Dehn- und Stauelemente, deren Geometrie und Elastizitätsgrenze sich längs der Rückenlehne von oben nach unten verändert, angeordnet sind.

Ein ähnliches Merkmal zur ungedämpften Energieabsorption bei einem Heckaufprall durch einen Rückenlehnenrahmen, dessen Wände dünn ausgebildet sind, wird in DE-A- 42 38 549 beschrieben.

Bekannt ist aus der DE 92 02 219 U1 ein Gurtaufroller mit Klemmeinrichtung zur Kraftbegrenzung eines Rückhaltesystems in Verbindung mit Verformung und Energieabsorption. Der Gurtaufroller und die Klemmeinrichtung sind durch eine Platte mit Stegen miteinander verbunden. Durch Festklemmen des Gurtes bei Überschreitung eines Schwellwertes werden die Stege verformt, mit der Folge der Zunahme des Abstandes der Klemmeinrichtung vom Gurtaufroller. Durch Bruch der Sollbruchstellen der Stege erfolgt der Abbau der auf den Insassen wirkenden Energie.

Für den Insassenschutz bei einem mittigen Frontaufprall eines Fahrzeuges, Zuges oder Flugzeuges ist aus der EP-A- 0423348 ein Sitz bekannt. Ein Paar Energieabsorber ist an einem Paar der vorderen und hinteren Sitzfüße drehbar gelagert. Diese Sitzfüße sind an dem Boden 6 und einem Sitzrahmen drehbar gelagert. Jeder Energieabsorber besteht aus einem am hinteren Sitzfuß und Boden drehbar gelagerten Stab mit einem konusförmigen Ende und einem am vorderen Sitzfuß und Sitzrahmen drehbar gelagerten, verformbaren Rohr mit einer konusförmigen Nabe zur Aufnahme des Stabendes. Während der Verschiebung des Sitzes beim mittigen Frontaufprall weitet das Stabende das Rohr zwecks Energieabsorption infolge Formänderungs- und Reibungsarbeit auf. Wegen des Gleitens des Stabendes entlang dem Innenzylinder des Rohres darf die Wand während der plastischen Verformung nicht aufgesprengt, sondern nur plastisch verformt werden.

Eine andere energieabsorbierende, am Fahrzeugteil befestigte Dämpfungsvorrichtung, deren Zylinder durch Gurtkraft verformt wird, zeigt die DE-A- 39 33 721. Im Zylinder ist eine Stange aufgenommen, deren Ende aus dem Zylinderende herausragt und mit dem Sicherheitsgurt verbunden ist sowie an dem anderen Ende in der Zylinderbohrung mehrere Wälzkörper angeordnet sind. Der Außendurchmesser der durch die Wälzkörper gebildeten Ringanordnung ist größer als der Innendurchmesser des Zylinders. Durch Gurtkraft dringen die Wälzkörper in die Zylinderbohrung ein. Obwohl eine äußerst geringe Verformungs- und Reibungsarbeit verrichtet wird, zeigt die Erfindung ein *richtungsweisendes* Merkmal, daß eine Vorrichtung ausschließlich in Verbund mit dem Sicherheitsgurt in der Lage ist, Energie optimal zu absorbieren.

Der Erfindung liegt mithin die Aufgabe zugrunde, einen Halter zur sicheren Rückhalterung beider Schultern einschließlich des Halsbereiches eines angegurteten Insassen zu schaffen. Die Aufgabe wird durch die Merkmale des Patentanspruches 1 gelöst. Die Unteransprüche beschreiben vorteilhafte Ausbildungen der Erfindung.

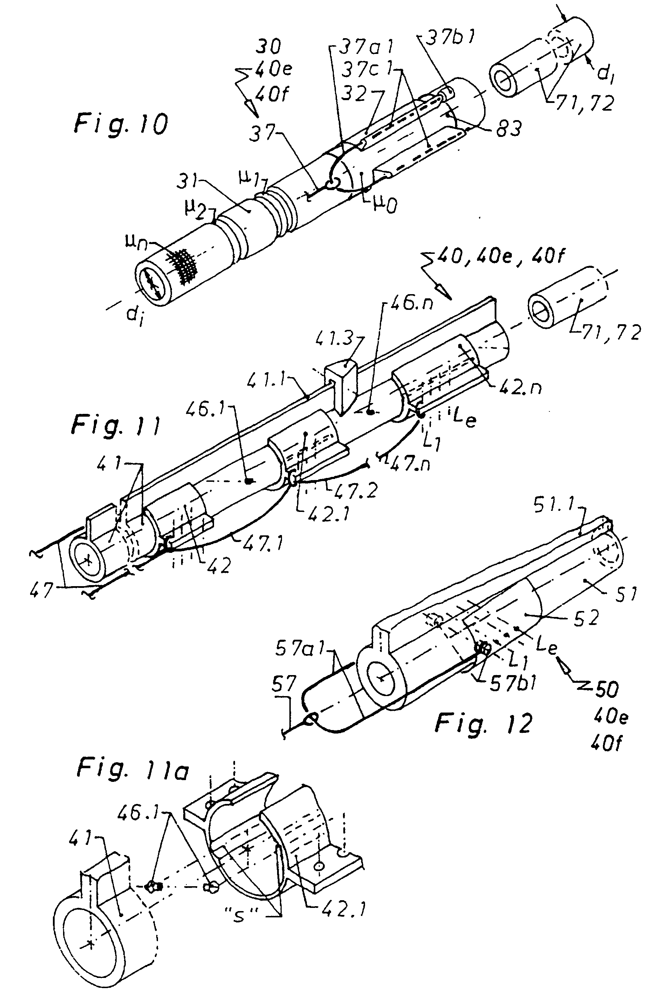

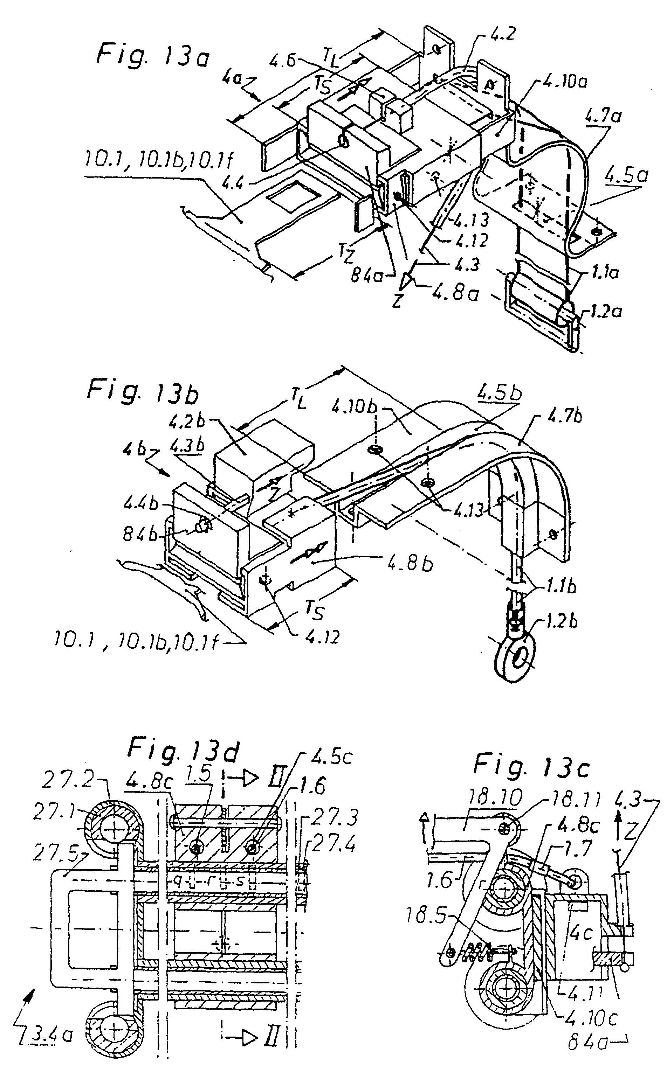

Das erfindungsgemäße Rückhaltesystem weist folgende Vorteile auf:
- In Verbindung mit einem herkömmlichen oder neuen Sicherheitsgurtsystem gemäß EP-B- 1 037 773, das mit Schloßzungen und dazugehörigen Gurtschlössern versehen ist, besteht der wesentliche Vorteil des Schulter- und Halshalters darin, daß der Einsatz das weltweite gültige Gesetz zum Angurten nicht verletzt und entweder vor der Fahrt/dem Flug oder bei Unfall/Turbulenzen oder bei Überschreitung einer Grenzgeschwindigkeit, z.B. ab 80 km/h, bestimmbar ist. Bei dem herkömmlichen Sicherheitsgurt (**Fig.** 14) ist der Umlenkpunkt oder das Gurtende an der Oberkante der Rückenlehne festlegbar. Durch das Verbund-Rückhaltesystem werden die durch Beschleunigungen resultierenden Belastungen (**Fig.** 1) und Bewegungen/Verlagerungen/Verdrehungen, vor allem von Schultern, Hals und Kopf minimiert.
- Der Oberkörper **95** besteht aus einem Rumpf **95.2** und Kopf **95.1**. In z-y und x-y Ebene (**Fig.** 1) konvergieren dank der Rückhalterung der Schultern des angegurteten Rumpfes der Nick- und Gierwinkel "U_{S}" und "O" der 1. Masse des Rumpfes um die "S"- und z-Drehachse gegen Null, mit der Folge der Verringerung der Vorverlagerung, der Nickbeschleunigung "Ü_{S}"-, "Ü_{H}"- und Gierbeschleunigung "Ö"-abhängigen Belastung "F_{Sy}", "F_{Hy}" und "T" bei beliebigem Frontaufprall. In Analogie werden die Belastungen "T", "F_{Sx}", "F_{Ix}" und/oder "F_{Sz}" bei beliebigem Seitenaufprall und/oder Überschlagen verringert. Dieses Merkmal liefert einen Beitrag für eine Neuentwicklung von zuverlässigen Airbags durch Verlängerung der Auslösezeit, Verringerung des Volumens und/oder der Gasgeschwindigkeit.
- Zweifellos stützt eine einstückige Halsschale **10.4a, 10.4c**, welche mit einstückiger Schale **10.2a, 10.2c** fest verbunden ist, den Hals z.B. eines HWS-Verletzten am sichersten ab. Werden solche Schulter- und Halshalter **10a, 10c** im Fahrzeug eingebaut, lehnen die Insassen, die nicht HWS-verletzt sind, die Verwendung wegen Wärmestau im Hochsommer, Krawatten- und/oder Halsschmucktragen ab. Lösbar ist diese Konfliktsituation durch die Merkmale des Anspruches 1, 2 oder 3.
- Sind ein- oder zweistückige Schalen **10.2, 10.2a** bis **10.2f** für einen Sitz und eine Anzahl von den zugehörigen Wechsel-Energieabsorbern **10.3, 10.3a** schulterförmig ausgebildet, dann läßt sich der Einsatzbereich für z.B. einen Sportler mit breiten Schultern durch Abnahme der Energieabsorber ohne Wechsel der Schulterschalen und/oder durch Einstellung der Schulterschalen in Höhe und/oder Breite erweitern. Bei Nichtverwendung beeinträchtigen schulterförmige und/oder halsförmige Schalen das Design der Sitze und den Verkauf der Fahrzeuge. Vor allem bei Nobelwagen muß die äußere Formgebung der Schale z.B. des Halters **10d, 10e** (**Fig.** 1, 8) der Form des jeweiligen Sitzes **3d, 3e** angepaßt sein, wobei die Schulterschalen des Halters und/oder Energieabsorber schulterförmig sind. Die Entscheidung für schulter- oder sitzförmige Schalen hängt mit dem Verwendungszweck der Rückhaltesysteme beim Fahrzeug (Bus, Krankenwagen, Van, Nobelwagen usw.), Zug und Flugzeug zusammen. Lösbar ist diese Konfliktsituation durch die Merkmale der Ansprüche 4 bis 10.
- Lösbar ist der Problemfall II durch variable Rückhalterung eines einzigen Körperteiles (Schultern mit Halsbereich). Vorzugsweise sind ein- oder zweistückige, schulterfömige Energieabsorber **10.3, 10.3a** von ein- oder zweistückigen, verformbaren Schalen **10.2, 10.2a** bis **10.2f** und ein- oder zweistückige, halsförmige Energieabsorber **10.5, 10.5a, 10.5c** von ein- oder zweistückigen, verformbaren Schalen **10.4, 10.4a** bis **10.4c, 10.4f** abnehmbar und daran mittels Haftverschlusses z.B. Klettverschlusses befestigbar. Zur Kostensenkung, um den Bedarf für Personen mit unterschiedlicher Hals- und Schulterform zu decken, können eine große Anzahl von Energieabsorbern **10.3, 10.3a, 10.5, 10.5a, 10.5c** mit verschiedenartiger Hals- und Schulterform und eine geringe Anzahl von Schalen hergestellt werden. **Fig.** 14 veranschaulicht die Anpassung des Halters zur Körperform eines auf dem Sitz **3a, 3b** sitzenden Kindes durch die abnehmbaren Energieabsorber.
- In Rückenlehnen oder Sitzkissen der zugehörigen Sitze **3a bis 3c** (**Fig.** 14) sind die Halter **10a bis 10c** zur einfachen Aufbewahrung einsteckbar und durch Einrasten des zugehörigen Paares Schloßzungen **10.1, 10.1b, 10.1f** arretierbar, aber durch Drücken der zugehörigen Entriegelungstasten **87a bis 87c** lösbar und herausnehmbar. Durch Drücken der Entriegelungstaste 87a werden beide Schloßzungen des Schulter- und Halshalters **10a** aus dem Sitzkissen **3.1a** entriegelt. Als Vorderteil jenes Sitzkissens ist der Halshalter **10a** herausnehmbar. Die Aussparung (Ausschnitt) jenes Sitzkissens bietet Platz für beide Unterschenkel eines auf dem Hinterteil sitzenden Kindes.
- Zwecks Bedienungskomfort beim Aussteigen oder schneller Rettung des Insassen wird eine einzige Generallösetaste **84** des Gurtschlosses **9.1** gedrückt, um alle Schloßzungen des Sicherheitsgurtes in den Gurtschlössern zu entriegeln und ∗
   ∗ den Halter **10d, 10e** in die Ruhestellung zurückzubringen oder
   ∗ alle Schloßzungen des Halters **10, 10a bis 10c, 10f** in den Gurtschlössern zu entriegeln.
- Beide Blöcke **29a** der Schwenkvorrichtung **28a** sind von zwei Paaren Hilfsrohren **71, 72** des Rückenlehnenrahmens **3.4d, 3.4e** (**Fig.** 1 und 8) geführt und nach Höhenverstellung verriegelbar.
- Abbaubar ist große Aufprallenergie während der Dämpfung der Pendelschwingung durch
   ∗ Bruch der Sollbruchelemente "S₁₁" bis "Sₘₙ" und/oder "H₁₁" bis "Hₙₘ" des Energieabsorbers **10.3, 10.3a** und/oder **10.5, 10.5a, 10.5c**;
   ∗ Bruch der Sollbruch stellen "s" der Feder **10.9**;
   ∗ Bruch der Sollbruchstellen der Spannelemente folgender Energieabsorbersätze **30, 40, 50 (Fig.** 10 bis 12) mit Seilen **37, 47, 57** stellvertretend für **40e, 40f** mit Seilen **47e, 47f,** die mit Halter **10e** strammer, weniger strammer und/oder lose verbunden sind, und
   ∗ Reibung der Spannelemente **32, 32.1 bis 32.n, 42, 42.1 bis 42.n, 52, 52.1 bis 52.n,** die sich entlang den zugehörigen Halteelementen **31, 41, 51** bewegen.
- An oder in der Rückenlehne ist der Schulter- und/oder Halshalter einsteckbar oder schwenkbar befestigt. Außerdem läßt sich die Anpassung an die Körpergröße des Insassen durch Breiten- und Höhenverstellung des Halters vornehmen.
- Die Energieabsorbersätze und Unterbringung in den Rückenlehnenrahmen und/oder Sitzrahmen stellen eine platz-, gewichtssparende, kostengünstige und steifigkeitserhöhende Bauweise dar. Hinzu kommt, daß sich die Elemente größtenteils als Strangpreßprofile, Tiefzieh-, Guß-, Druckgußteile sowie Teile aus Federblech oder -stahl herstellen lassen, wobei das einfach herzustellende, rohrförmige Profil für die Ausführungsformen bevorzugt wird.
   Weiterhin verringern sich die Kosten und Ausfallquote durch eine einzige Toleranz (Über- oder Untennaß eines runden Profils), das Vorspannen der Spannelemente am oder im Halteelement und Vorfertigung aller Energieabsorbersätze unter Vorspannkraft vor der Lieferung und Montage an dem Sitz- und/oder Rückenlehnenrahmen. Die Einstellöcher "L₁" bis "L_{c}" der Spannelemente z.B. **42, 42.1, 42.n, 52 (Fig.** 11 und 12) und/oder das Festklemmen der Klammem **37b1** am Seil bieten Einstellmöglichkeit für die Positionierung der Spannelemente zueinander.
   Aufgrund hoher Energieabsorption bei geringerer Masse können Leichtmetall (z.B. duktiler Leichtmetalldruckguß wie GD-MgA12 oder Alu-Strangpreßteil), Kohlenstoff-, Glas- oder Kevlarfasern verstärkte Kunststoffe Verwendung finden.
- Bruch der Sollbruchstellen "s" jedes Energieabsorbers liefert einen eindeutigen, gerichtlich brauchbaren Beweis für das Anschnallen der Insassen bei Unfall.
- Durch Einbinden der Halteelemente **(Fig.** 1, 10, 11) in den Rückenlehnenrahmen und/oder Sitzrahmen erhöht sich die Steifigkeit des Sitzes enorm. Die Halteelemente können Bestandteile des Rücken- oder Sitzrahmens sein.
- Die die Schloßzungen aufzunehmenden Gurtschlösser werden vom Rückenlehnen- oder Sitzrahmen vorwiegend getragen.
- Zweipunkt- oder Dreipunkt-Sicherheitsgurt ist mit Energieabsorbersätzen ausrüstbar. Die Leitteile der Gurtschlösser in Steckverbindung mit den zugehörigen Schloßzungen haben zwei Aufgaben, die Integration der Energieabsorber in einen Zweipunkt-, Dreipunkt- oder Multipunkt-Sicherheitsgurt zu ermöglichen und die Bewegung der Gurtschlösser während der Belastung oder Entlastung zu führen.
- Infolge zunehmendem Ziehen des Seiles verrichtet das Spannelement Formänderungs- und Reibungsarbeit, die bei Überschreitung des zulässigen Schwellwertes durch Bruch der Sollbruchstellen "s", zwei in **Fig.** 11a, bei Berührung mit beiden Köpfen des Sperrstiftes **46.1, 46.n** freigegeben wird. Die Sollbruchstelle kann als Riß, Sicke, Loch oder Aussparung ausgebildet sein.
- In der anderen Ausführungsform erfolgt das Freisetzen der geleisteten Arbeit (Energie) durch Bruch
   ∗ bei Überschreitung der Fließgrenze des Spannelements,
   ∗ infolge der Zwangsverformung des Mitnehmers oder Erweitern (Aufsprengen) des Spannelements bei Berührung mit einem keilförmigen Sperrelements **41.3** (**Fig.** 11) oder mit einem Längssteg **41.1, 51.1 (Fig.** 12) mit zunehmender Dicke.
- Im wesentlichen besteht der Energieabsorber aus einem rohrfömigen Grundkörper mit/ohne Längssteg als Halteelement und einem Spannelement, das an oder in dem Halteelement angeordnet ist. Verwendbar sind die Seile für stramme, weniger stramme und/oder lose Verbindung der
   ∗ Spannelemente untereinander zwecks Bildung einer Energieabsorberreihe z.B. **R42** (nicht eingetragen) aus sich öffnenden Spannelementen **42, 42.1 bis 42.n** und Halteelement **41 (Fig. 11)**. Genauso werden die anderen Energieabsorberreihen wie **R32, R52** usw. zusammengebaut;
   ∗ Energieabsorberreihen untereinander zwecks Bildung eines Energieabsorbersatzes **30, 40, 50** (**Fig.** 10 bis 12) und
   ∗ Energieabsorbersätze mit Verbindungsteil **1.2a, 1.2b** des Zugbandes **1.1a, 1.1b, 1.5, 1.6, 47e, 47f** (**Fig.** 1, 13a bis 13c) zwecks Abbau der Teilenergien "ΔFᵢ" unter Anwendung des Energieabsorptionsverfahrens.

Als zulässiger Schwellwert des Körperteiles ist jede Differenz zweier Lasten "ΔFᵢ" kleiner als die verletzungsbedingte Belastung. Die Schwellwerte dürfen unterschiedlich groß sein. Für die Energieabsoiption bis zu Anfangsschwellwert "ΔF₁" **(Fig.** 9) ist beispielsweise mindestens ein Spannelement **42e, 42f (Fig.** 1) oder Energieabsorber **10.3, 10.3a, 10.5, 10.5a, 10.5c** verantwortlich.

Um Schwingung zu vermeiden und den Beginn der Energieabsorption festzulegen, muß mindestens ein Leitspannelement **52** bis zu einem kleiner als "ΔF₁" liegenden Belastungsniveau z.B. "ΔF₁ - 500 N" vorgespannt werden. Von diesem Belastungsniveau an leistet dieses Leitspannelement durch Ziehen des Seiles **57** Formänderungs- und Reibungsarbeit, während dessen die Energie "ΔF₁" durch Bruch der Sollbruchstellen jenes Spannelementes **42e, 42f** abgebaut wird. Dies hat zur Folge, daß der Insasse weder verletzt noch zurückgeschleudert ist. Die Zunahme der Energie um "ΔF₂" wird durch Bruch mindestens eines nächsten Spannelements **52.1** abgebaut, mit der Folge, daß der Insasse weder verletzt noch zurückgeschleudert ist.

Der Abbau der Energie wiederholt sich schrittweise und solange bis zu einem z.B. auf "ΔFₑ- 500 N" definierten Belastungsbereich, innerhalb dessen alle Spannelemente des Energieabsorbersatzes **50** gebrochen sind, die Leitspannelemente **52** sich nicht weiter bewegen können und mindestens ein auf "ΔFₑ - 500 N" vorgespanntes Leitspannelement **42** und/oder mindestens ein Spannelement des Energieabsorbersatzes **40** Formänderungs- und Reibungsarbeit leisten wird/werden.

Die Zunahme der Energie um "ΔF_{f}" wird durch Bruch der Leitspannelemente **52** und/oder mindestens eines nächsten Spannelements **42.1** freigegeben, mit der Folge, daß der Insasse weder verletzt noch zurückgeschleudert ist.

Der Abbau der Energie wiederholt sich schrittweise solange bis
1. zum Verbrauch der Gesamtenergie "Fₙ" oder
2. zu einem neuen z.B. auf "ΔFₕ - 500 N" definieiten Belastungsbereich, innerhalb dessen alle Spannelemente gebrochen sind, das Leitspannelement **42** sich nicht weiter bewegen kann und mindestens einer der folgenden Energieabsorbersätze zugeschaltet wird, z.B.
   ∗ nichtgezeichneten **30, 40a, 50a** der anderen Strukturhälfte des Sitzrahmens **3.3a,**
   ∗ nichtgezeichneten **40, 50** der anderen Strukturhälfte des Rückenlehnenrahmens **3.4a,**
   ∗ nichtgezeichneten **30M, 40M, 50M, 65M,** welche an den gegenüberliegenden Querteilen **3.41, 3.42** des Rückenlehnenrahmens **3.4a** befestigt sind,
   ∗ nichtgezeichneten **30N, 40N, 50N, 65N,** welche an den gegenüberliegenden Querteilen **3.31, 3.33** (nicht gezeichnet) des Sitzrahmens **3.3a** befestigt sind.

Da der Insasse einer Reihe zulässiger Schwellwerte "ΔFᵢ", wobei i = 1 bis n, während der Aufpralldauer ausgesetzt und vom Sicherheitsgurt, dessen Reißfestigkeit 24000 N erheblich höher als "ΔFᵢ" liegt, zurückgehalten war, steigt er nach Drücken einer einzigen Generallösetaste **84** zwecks Aufheben der Steckverbindung aller Schloßzungen mit Gurtschlössern aus dem Fahrzeug, Zug oder Flugzeug **(Fig.** 1 und 14) unverletzt aus.
- Das Aufbringen eines geräuschdämpfeuden Materials **83** (**Fig.** 1, 10) mit beliebigem Reibungskoeffizient µₙ, unterschiedlich oder progressiv verlaufendem Reibungskoeffizient an der Berührungsfläche des Halteelements und/oder Spannelementes stellt eine weitere Ausführungsform zur Geräuschdämgfung und Verrichtung einer Reibungsarbeit dar. Desweiteren können die Halteelemente und/oder die sie umschließenden Spannelemente durch Material mit unterschiedlichem Reibungskoeffizient überzogen werden. Damit sind Geräusche zwischen Halteelement und Spannelement weitestgehend vermeidbar.
- Für den Abbau der Energie beim Submarining und/oder Überschlagen erfolgt die Energieabsorption beispielsweise mittels der Energieabsorbersätze, die im Sitzrahmen angeordnet sind und mittels der Seile mit Gurtschloß stramm, weniger stramm und/oder lose verbunden sind.
- Realisierbar ist ein einziger Sitz mit Rückhaltesystem für Personen (Erwachsene und/oder Kinder) verschiedener Altersbereiche, zutreffender Gewichtsklassen, die den Energieabsorbersätzen zugeordnet werden. Die Energieabsorbersätze und/oder Energieabsorber weisen unterschiedliche Schwellwerte auf. Dadurch können Kinder sicher reisen und kann die Belegung der Sitze im Zug, Bus oder Flugzeug optimiert werden.

Nachfolgend werden anhand der Zeichnungen mehrere Ausführungsformen der Erfindung näher erläutert. Es zeigen:
- **Fig.** 1: eine Seitenansicht eines mittels einer 2. Ausführungsform einer Schwenkvorrichtung **28a** von der Ruhestellung P in die Betriebsstellung P1 schwenkbaren Schulterhalters **10e** mit Energieabsorbern **10.3.**
- **Fig.** 2: eine perspektivische Ansicht des angegurteten, sehr weit vorverlagerten Dummies beim Offset Crashtest.
- **Fig.** 3: eine perspektivische Ansicht einer Ausführungsform einer Symmetriehälfte eines Schulter- und Halshalters **10** mit Energieabsorbern **10.3, 10.5** und Schloßzunge **10.1.**
- **Fig.** 4: eine schematische, perspektivische Ansicht einer weiteren Ausführungsform eines Schulter- und Halshalters **10a** mit breiter Halskrause **10.4a**, Energieabsorbern **10.3a, 10.5a** und Schloßzungen **10.1f**.
- **Fig.** 5: eine perspektivische Ansicht einer weiteren Ausführungsform einer Symmetriehälfte eines Schulter- und Halshalters **10b** mit Energieabsorbern **10,3, 10.5, 10.9**.
- **Fig.** 6: eine perspektivische Ansicht einer weiteren Ausführungsform eines Schulter- und Halshalters **10c** mit Energieabsorbern.
- **Fig.** 7: eine perspektivische Ansicht einer weiteren Ausführungsform einer Symmetriehälfte eines Schulterhalters **10f** mit Schloßzunge **10.1f** in Steckverbindung mit Gurtschloß **4b**.
- **Fig.** 8: eine perspektivische Ansicht einer weiteren Ausführungsform einer Symmetriehälfte eines mittels einer 1. Ausführungsform einer Schwenkvorrichtung **28** von der Ruhestellung P in die Betriebsstellung P₁ schwenkbaren Schulterhalters **10d**.
- **Fig.** 9: eine durch das Rückhaltesystem unter Zuhilfenahme eines Energieabsorptionsverfahrens abzubauende Gesamtenergie "Fₙ" bei Unfall.
- **Fig.** 10: eine schematische, perspektivische Ansicht einer 1. Ausführungsform eines Energieabsorbersatzes **30, 40e, 40f.**
- **Fig.** 11: eine schematische, perspektivische Ansicht einer 2. Ausführungsform eines Energieabsorbersatzes **40, 40e, 40f.**
- **Fig.** 11a: eine perspektivische Detailzeichnung eines Spannelementes mit Sollbruchstellen "s" vor der Sperrung durch die Köpfe eines Sperrstiftes.
- **Fig.** 12: eine schematische, perspektivische Ansicht einer 3. Ausführungsform eines Energieabsorbersatzes **50, 40e, 40f.**
- **Fig.** 13a: eine schematische, perspektivische Ansicht einer 1. Ausführungsform eines Gurtschlosses **4a** mit einem Leitteil **4.7a,** Auslösekabel **4.2,** Zugband **1.1a** und Verbindungsteil **1.2a**.
- **Fig.** 13b: eine schematische, perspektivische Ansicht einer 2. Ausführungsform eines Gurtschlosses **4b** mit einem Leitteil **4.7b,** Elektromotor **4.2b,** Zugband **1.1b** und Verbindungsteil **1.2b**.
- **Fig.** 13c: Schnittzeichnung einer 3. Ausführungsform eines Gurtschlosses 4c mit zwei Zugbändern **1.5, 1.6** entlang der Linie II-II nach **Fig.** 13d.
- **Fig.** 13d: eine Schnittzeichnung eines in Breite der Rückenlehne verstellbaren Gehäuse **4.8c** des Gurtschlosses **4c** mit zwei Löchern **4.5c** zu loser Führung der Zugbänder **1.5, 1.6**.
- **Fig.** 14: eine Vorderansicht von Sicherheitssitzen **85a to 85e, 86** aus der Integration der Sicherheitsgurte **1a bis 1e** und Schulterhalter **10, 10a, 10b, 10d, 10e** in die Sitze **3a bis 3e** für Insassen (Passagiere) unterschiedlicher Gewichtsklassen und Körpergrößen.

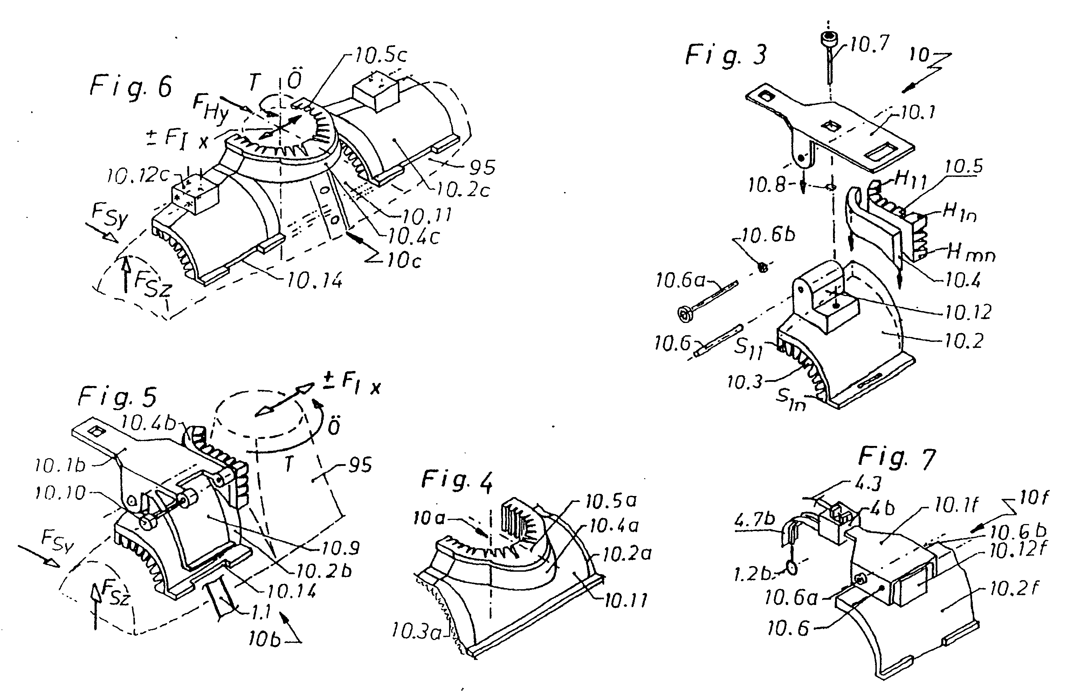

Bei den Ausführungsformen gemäß **Fig.** 1, 3 bis 8 besteht der Schulter- und Halshalter **10, 10a bis 10f** aus
- ein- oder zweistückigen Schulterschalen **10.2, 10.2a bis 10.2f** mit schulterförmigen Energieabsorbern **10.3, 10.3a** und/oder
- ein- oder zweistückigen Halsschalen **10.4, 10.4a bis 10.4c, 10.4f** mit halsförmigen Energieabsorbern **10.5, 10.5a, 10.5c.**
   Durch Einstecken des Paares Halsschalen **10.4, 10.4b** ins Paar Schulterschalen **10.2, 10.2b** in Pfeilrichtung **(Fig.** 3) wird die Schale des Schulter- und Halshalters **10, 10b (Fig.** 5) gebildet.

In geschlossener Form ist der einstückige Halter **10a** zur Rückhalterung der Schultern und des Halses des Insassen durch eine Verbindungsschale **10.11** am steifsten, während bei offener Form ohne Verbindungsschale ist der einstückige Halter **10c,** weniger steif, aber luftdurchlässiger. Lösbar sind diese Nachteile durch die steife Schwenkvorrichtung **28, 28a** des um beide Schultern schwenkbaren Halters **10d, 10e** in unterschiedlichen Ausführungsformen.

Am Flansch **10.12** des Schulter- und Halshalters **10** ist die Schloßzunge **10.1** durch Stift **10.6** oder durch Schraube **10.6a** mit Mutter **10.6b** drehbar gelagert. Durch Verdrehen der Schraube **10.7** im Gewindeloch des Flansches **10.12** und ihre Sicherung mittels einer Mutter **10.8** läßt sich eine Höhenanpassung an der Schulterform vornehmen. Bedingt durch geschlossene Aussparungen der Schale **10.2** und Schloßzunge **10.1** zu loser Führung des Gurtes **1.1** ist das Herausnehmen des Gurtes zur Aufbewahrung des Halters zeitaufwendig. Dank offener Aussparung **10.14** der Schale **10.2b, 10.2c, 10.2f** und offener Aussparung der Schloßzunge **10.1b** läßt sich der Gurtabschnitt durch Schnellsperrstift **10.10** nach Anlegen an den Halter lose arretieren sowie führen und durch Ziehen des Schnellsperrstiftes herausnehmen.

Die Schloßzunge **10.1f** der Ausführungsform gemäß **Fig.** 7 wird durch Stift **10.6,** Schraube **10.6a** und Mutter **10.6b** am Flansch **10.12f** gesichert. Durch Verdrehen der Schraube **10.6a** im Gewindeloch des Flansches **10.12f** ist die Schale **10.2f** in Breite der Rückenlehne verschiebbar.

Bei der 1. und 2. Ausführungsform gemäß **Fig.** 1, 8 setzt sich jeder des Paares miteinander kraftschlüssig verbundenen Blöcke **29, 29a** der Schwenkvorrichtung **28, 28a** des Halters **10d, 10e** zusammen, aus zwei Rohren
- **28.1, 28.2**, die durch Verbindungsteil **28.3** kraftschlüssig verbunden sind, und einer L-förmigen Platte **28.4** oder
- **41e, 41f**, die durch Verbindungsteil **28.3** kraftschlüssig verbunden sind, und einer L-förmigen, teils seitlich offenen und teils seitlich geschlossenen Platte **28.4a.**

Das erste Ende jedes Schwingarmes **28.5, 28.5a** ist zwischen Platte **28.4, 28.4a** und Verbindungsteil **28.3** leicht geführt. Durch Welle **28.7** sind beide Schwingarme miteinander verbunden. Am anderen Ende jedes Schwingarmes sind die Schale **10.2d, 10.2e** und der Hebel **28.6, 28.6a** befestigt. In Ruhestellung befindet sich jede Schale in der Rückenlehne oder an der oberen Seite der Rückenlehne, ggf. unterhalb der Kopfstütze **3.6.** Falls ein Stützrohr **3.61** vorhanden ist, muß die Schale um das Stützrohr ausgespart werden. Die Steifigkeit des geschwächten Halters wird durch Verstärkungsschale **10.13** erhöht.

Da die Rohre **28.1, 28.2 oder 41e, 41f** von zwei Paaren Hilfsrohren **71, 72** des Rückenlehnenrahmens **3.4d, 3.4e** geführt sind, sind die Blöcke **29, 29a** in Pfeilrichtung "U" (**Fig.** 1, 8) höhenverstellbar, entweder manuell oder motorisch z.B. unter Zuhilfenahme eines nichtgezeichneten Elektromotors **20.5.** Durch das Aktivieren des Elektromotors mittels Drücken der Generallösetaste **84** eines Gurtschlosses **9.1 (Fig.** 14) wird der Halter **10d, 10e** in Ruhestellung zurückgebracht.

Als Halteelemente und Träger dienen die langen Rohre **41e, 41f** zur Bildung des Rückenlehnenrahmens **3.4d, 3.4e** und zweier Paare Energieabsorbersätze **40e, 40f,** deren Seile **47e, 47f** mit einem Paar Schwingarmen **28.5a** über Anschlagstücke **28.9a** als Umlenker stramm, weniger stramm oder lose verbunden sind, um den Beginn der Energieabsorption zu bestimmen. Durch Vorverlagerung des gestrichelt gezeichneten Rumpfes **95.2** und Kopfes **95.1** frei nach vorne schwenkt sich jeder gestrichelt gezeichnete Schwingarm **28.5a** mit Schale **10.2e** in Position P₂ durch die Öffnung der L-förmigen, teils seitlich offenen und teils seitlich geschlossenen Platte **28.4a.** Währenddessen werden Formänderungs- und Reibungsarbeit durch die Verschiebung der vorgespannten, gestrichelt gezeichneten Spannelemente **42e, 42f** entlang den zugehörigen Halteelementen **41e, 41f** verrichtet. Infolge der Überschreitung der Fließgrenze oder des Bruches einer oder mehrerer vorgesehener Sollbruchstellen wird die gespeicherte Energie freigegeben. An dem zugehörigen Halteelement **41e, 41f** lassen sich beliebige Spannelemente zur Vermehrung der Energieabsorption anbringen (Hintereinanderschaltung).

Von der U-förmigen Platte **10.15**, wie **10.14,** der Schale **10.2e** ist der Gurtabschnitt **1.1**, **1.2** lose geführt und, falls erforderlich, nach dem Schwenken durch Schnellsperrteil **10.10 (Fig.** 5) lose arretiert.

Beim manuell oder durch Antriebsvorrichtung **80** betätigbaren Schwenken beider Schwingarme **28.5, 28.5a** drücken beide Hebel **28.6, 28.6a** die durch Federn **28.10, 28.10a** vorgespannten Sperrklinken **28.8, 28.8a** zur Freigabe der durch Federn **28.13** vorgespannten, in Rohren **28.11** leicht geführten Sperrstifte **28.12**, die sich in die Löcher **28.14** zur Sperrung der schwenkenden Schwingarme bewegen. Im Sperrzustand verringert der verformbare Halter **10d, 10e** mit Energieabsorbern **10.3** die Belastungen bei Überschlagen, Gieren oder turbulenzbedingtem Schütteln. Das Loch **28.14** kennzeichnet die Position jedes Rohres **28.11** am Verbindungsteil **28.3.** Bei der Positionsveränderung von Betriebsstellung (Position P₁) in Ruhestellung (Position P) werden nach Einrasten beide Schwingarme **28.5, 28.5a** durch Anschlagstücke **28.9, 28.9a** gehalten.

Bei der 1. Ausführungsform gemäß **Fig.** 10 besteht der Energieabsorbersatz **30, 40e, 40f** aus einem Halteelement **31,** Leitspannelement **32** sowie den nichtgezeichneten Spannelementen **32.1 bis 32.n.** Nach Stecken in die zylinderförmigen Kanten **37c1** des Leitspannelementes **32** werden beide Endabschnitte des Hilfsseiles **37a1** des Seiles **37** durch Festklemmen beider Seilenden mittels Klammern **37b1** oder beider zylinderförmigen Kanten **37c1** samt Endabschnitten gesichert. Der Innendurchmesser "dᵢ" des Halteelementes **31, 41** ist geringfügig großer als der Außendurchmesser "dᵢ" des Hilfsrohres **71, 72**.

Bei der 2. Ausführungsform gemäß **Fig.** 11, 11a besteht der Energieabsorbersatz **40, 40e, 40f** aus einem Halteelement **41,** Leitspannelement **42** sowie den Spannelementen **42.1 bis 42.n.** Durch stramme, weniger stramme oder lose Verbindung der Seile **47.1 bis 47.n** mit Spannelementen **42, 42.1 bis 42.n** untereinander, ggf. durch Veränderung der Belegung des Paares Einstellöcher "L", ist der Einsatz jedes Spannelementes **42, 42.1 bis 42.n** bestimmbar. Durch beliebige Verbindung der Seile mit beliebigen Spannelementen **42, 42.1 bis 42.n** ist die Reihenfolge des Bruches der Spannelemente **42, 42.1 bis 42.n** beliebig festzulegen. Ebenso bestimmbar ist der Bruch jedes Spannelementes zum Abbau der Energie, wie z.B. durch Aufsprengen des Spannelementes **42.1 bis 42.n** bei Berührung mit beiden Köpfen des Sperrstiftes oder der Schraube **46.1 bis 46.n** oder beiden Seiten des Sperrelementes **41.3** oder durch Bruch infolge der Überschreitung der Fließgrenze unter zunehmender Belastung (Energie).

Bei der 3. Ausführungsform gemäß **Fig.** 12 besteht der Energieabsorbersatz **50, 40e, 40f** aus einem konusförmigen Halteelement **51,** Leitspannelement **52** und den nichtgezeichneten Spannelementen **52.1 bis 52.n.** An Leitspannelement **52** werden beide Enden des Hilfsseiles **57a1** des Seiles **57** durch Nieten **57b1** gesichert.

Durch Aufweiten des konusförmigen Spannelementes **52, 52.1 bis 52.n** entlang
- dem konusförmigen Halteelement **51** und/oder
- dem in Längsrichtung zunehmenden Längssteg **51.1**
verläuft die Arbeitsfläche progressiv oder beliebig.

Bei der 1. und 2. Ausführungsform des Gurtschlosses **4a, 4b** (**Fig.** 13a und 13b) zur Aufnahme der Schloßzunge **2, 11, 25** ist das einstückig ausgebildete Leitblech **4.7a, 4.7b** mit Aussparung **4.5a** oder Längsnut **4.5b** zu loser Führung des Zugbandes **1.1a, 1.1b** vorgesehen. Mit Verbindungsteil **1.2a, 1.2b** des Zugbandes sind die Seile der Energieabsorbersätze **30, 40, 50 (Fig.** 10 bis 12) stramm, weniger stramm oder lose verbunden.

Nach Schieben eines Paares Einrastzungen **4.10a, 4.10b** des Leitbleches **4.7a, 4.7b** in die Aussparungen des Gehäuses **4.8a, 4.8b** des Gurtschlosses **4a, 4b** in Richtung eines Doppelpfeiles rasten die Halteteile **4.12** in die Haltelöcher **4.13** ein.

Durch Ziehen der Schloßzunge unter Belastung bis zur Belastung "ΔF₁ - 500 N", kleiner als die Anfangsschwellwert "ΔF₁", wird das Gurtschloß samt Spannelement/en und/oder Energieabsorber/n entlang den Einrastzungen **4.10a, 4.10b** um den Verformungsweg "T_{F}" (nicht gezeichnet) verschoben. In unbelastetem Verformungszustand muß das Gehäuse **4.8a, 4.8b** mit/ohne Halteteile **4.12** in die Einrastzungen **4.10a, 4.10b** zurückgezogen werden. Dies ist möglich, wenn "T_{L}" mindestens so groß wie "T_{S} + T_{F}" ist. Ob die Halteteile **4.12** und Haltelöcher **4.13** benötigt werden, klärt der Versuch. Vorteil der Haltepaare ist die eindeutige Positionierung des Gurtschlosses in Rückenlehne oder Sitzkissen. Aufgrund der beschränkten Tiefe "T" (nicht gezeichnet) der Rückenlehne oder des Sitzkissens (**Fig.** 14) können die beiden für "T_{L}" verantwortliche Einrastzungen **4.10a**, **4.10b** nicht beliebig lang sein. Aus dem Grunde sind folgende Gegenmaßnahmen erforderlich:
- Während des Ziehens des Gurtschlosses, auch aus beiden Einrastzungen, unter großer Aufprallenergie, muß das Zugband **1.1a, 1.1b** vom an dem Rückenlehnen- oder Sitzrahmen befestigten Leitblech **4.7a, 4.7b** geführt sein;
- Zwecks Ausnutzen der Tiefe "T" wird die Länge "T_{Z}" der Schloßzunge und/oder die Länge "T_{L}" beider Einrastzungen **4.10a, 4.10b** verlängert;
- Durch Verzicht auf Leitbleche können die Seile der Energieabsorbersätze unmittelbar mit dem Verbindungsteil **1.2a, 1.2b** oder einem Ende des Sicherheitsgurtes stramm, weniger stramm und/oder lose verbunden sein; und/oder
- Dank der eingangs erwähnten Vorspannung mindestens eines Leitspannelementes **32, 42, 52** auf "ΔF₁ - 500 N" bewegt sich das Gehäuse nicht.

Bei der 3. Ausführungsform des Gurtschlosses **4c** (**Fig.** 13c) zur Aufnahme der Schloßzunge **2, 9, 11, 25** sind zwei Löcher **4.5c** des entlang einem Paar Rohren **27.3** des Rückenlehnen- oder Sitzrahmens verschiebbaren und verriegelbaren Gehäuses **4.8c** für lose Führung der Zugbänder **1.5, 1.6** mit Verbindungsteilen **1.2a, 1.2b** vorgesehen. Durch das Loch **2.3** des Gurtschlosses **4c** wird ein Seil, dessen Endabschnitte als Zugbänder **1.5, 1.6** dienen und durch Klammer **1.7** gesichert werden, gesteckt. Die Einrastzunge **4.10c** des Gurtschlosses **4c** ist in Schwalbenschwanz- oder formschlüssiger Verbindung mit Gehäuse **4.8c.** Aus großer Höhen- und Breitenverstellung können Spiele der Seile und Ungenauigkeit bei Vorspannung der Seile resultieren. Als Gegenmaßnahme lassen sich Energieabsorbersätze an den Teilen (nicht gezeichnet) des Verstellmechanismus unmittelbar anbringen.

Verwendbar ist das Gurtschloß **4a, 4b, 4c** für Gurtschloß **4, 7, 8, 8a, 9.1, 18a,18b, 19a, 19b** (**Fig.** 14).

Eine weitere Anwendung ergibt sich bei der Umwandlung eines Kindersitzes **85a** in eine Säuglingsliegeschale **86** durch Umklappen der Rückenlehne **3.2a** in einer Liegeposition. Entscheidend für den optimalen Insassenschutz ist der am Rückenlehnenrahmen einsteckbar oder drehbar angebrachte Schulter- und/oder Halshalter **10, 10a bis 10f (Fig.** 14), um den Halter am Oberkörper bezüglich der Höhe und/oder Breite der Rückenlehne anpassen zu können.

Für Kinder und Personen mit schwacher Halsmuskulatur, insbesondere wegen eines Schleudertraumas, eignet sich als Halskrause der Halshalter **10.4a** des Halters **10a,** dessen breiterer Kinnansatz des Energieabsorbers **10.5a** in **Fig.** 4 den Kopf besser abstützt und die Energie bei Vorverlagerung stärker absorbiert.

## Patentansprüche

1. Rückhaltesystem mit einem Schulterhalter zur Erhöhung des Insassenschutzes in einem Kraftfahrzeug, Zug oder Flugzeug bei einem Unfall, **dadurch gekennzeichnet, daß** der Körper des Insassen durch einen Sicherheitsgurt **(1a bis 1e)** und
a) das Paar Schultern durch einen Schulterhalter **(10, 10a bis 10f)** zurückgehalten ist;
b) der an oder in einer Rückenlehne **(3.2a bis 3.2e)** schwenkbar oder einsteckbar befestigt ist und
c) an dem der Sicherheitsgurt **(1a bis 1e)** angelegt ist.

2. Rückhaltesystem nach Anspruch 1, **dadurch gekennzeichnet, daß** das Paar Schultern und der Hals durch einen Schulter- und Halshalter **(10, 10a bis 10f)** zurückgehalten sind, der aus
a) einer Halsschale **(10.4a, 10.4c)** und einer Schulterschale **(10.2a, 10.2c)** oder
b) einem Paar Halsschalen **(10.4, 10.4b)** und einem Paar Schulterschalen **(10.2, 10.2b, 10.2d bis 10.2f)**
gebildet ist.

3. Rückhaltesystem nach Anspruch 2, **dadurch gekennzeichnet, daß** das Paar Halsschalen **(10.4, 10.4b)** mit dem Paar Schulterschalen **(10.2, 10.2b, 10.2d bis 10.2f)** steckbar verbunden und abnehmbar ist.

4. Rückhaltesystem nach mindestens einem der vorgenannten Ansprüche, **dadurch gekennzeichnet, daß** der Schulter- und/oder Halshalter **(10, 10a bis 10f)** mit mindestens einem Energieabsorber **(10.3, 10.3a, 10.5, 10.5a, 10.5c, 10.9)** versehen ist.

5. Rückhaltesystem nach Anspruch 4, **dadurch gekennzeichnet, daß** der Energieabsorber **(10,3, 10.3a, 10.5, 10.5a, 10.5c)** an der Schulter- und/oder Halsschale **(10.2, 10.2a** bis **10.2f, 10.4, 10.4a bis 10,4c, 10.4f)** mittels eines Haft-, Reiß- oder Klettverschlusses befestigt und durch ein Öffnen des Verschlusses abnehmbar ist.

6. Rückhaltesystem nach mindestens einem der vorgenannten Ansprüche, **dadurch gekennzeichnet, daß** die Schulterschale **(10.2, 10.2a bis 10.2f)** an die Schulterform angepaßt ist.

7. Rückhaltesystem nach mindestens einem der Ansprüche 4 bis 6, **dadurch gekennzeichnet, daß** der Energieabsorber **(10.3, 10.3a)** an die Schulterform angepaßt ist.

8. Rückhaltesystem nach mindestens einem der Ansprüche 2 und 5, **dadurch gekennzeichnet, daß** die Halsschale **(10.4, 10.4a bis 10.4c)** an die Halsform angepaßt ist.

9. Rückhaltesystem nach mindestens einem der Ansprüche 4, 5 und 8, **dadurch gekennzeichnet, daß** der Energieabsorber **(10.5, 10.5a, 10.5c)** an die Halsform angepaßt ist.

10. Rückhaltesystem nach mindestens einem der Ansprüche 8 und 9, **dadurch gekennzeichnet, daß** in der Halsschale **(10.4a)** der Energieabsorber **(10.5a)** als Halskrause mit einem breiten Kinnansatz ausgeformt ist.

11. Rückhaltesystem nach mindestens einem der vorgenannten Ansprüche, **dadurch gekennzeichnet, daß** an einem Rückenlehnenrahmen **(3.4a bis 3.4c)** Gurtschlösser angeordnet sind, mit denen der Schulter- und Halshalter **(10, 10a bis 10c, 10f)** über die Schloßzungen **(10.1, 10.1b, 10.1f)** verbunden ist.

12. Rückhaltesystem nach mindestens einem der vorgenannten Ansprüche, **dadurch gekennzeichnet, daß** durch ein Drücken einer Generallösetaste **(84)** am Gurtschloß **(9.1)** alle Schloßzungen des Sicherheitsgurtes **(1a bis 1c)** und des Schulter- und Halshalters **(10, 10a bis 10c, 10f)** in den Gurtschlössern entriegelt sind.

13. Rückhaltesystem nach Anspruch 12, **dadurch gekennzeichnet, daß** der Schulter- und Halshalter **(10, 10a, 10b)** an der Rückenlehne **(3.2c)** oder dem Sitzkissen **(3.1a, 3.1b)** zwecks Aufbewahrung befestigt und durch ein Drücken einer Entriegelungstaste **(87a bis 87c)** abnehmbar ist.

14. Rückhaltesystem nach mindestens einem der Ansprüche 1 bis 10, **dadurch gekennzeichnet, daß** der Schulter- und/oder Halshalter **(10d, 10e)** mit einer manuell oder motorisch betätigbaren Schwenkvorrichtung **(28, 28a)** versehen ist, welche an einem Rückenlehnenrahmen **(3.4d, 3.4e)** schwenkbar angebracht und/oder höhenverstellbar ist.

15. Rückhaltesystem nach Anspruch 14, **dadurch gekennzeichnet, daß** die um ein Stützrohr **(3.61)** der Kopfstütze **(3.6)** ausgesparte Schulterschale **(10.2d, 10.2e)** mit einer Verstärkungsschale **(10.13)** versehen ist.

16. Rückhaltesystem nach mindestens einem der Ansprüche 14 und 15, **dadurch gekennzeichnet, daß** eine Antriebsvorrichtung **(80)** den Schulter- und/oder Halshalter **(10d, 10e)** von der Ruhestellung (P) um beide Schultern des Insassen bis zur Betriebsstellung (P₁) schwenkt.

17. Rückhaltesystem nach Anspruch 16, **dadurch gekennzeichnet, daß** die Auslösung der Antriebsvorrichtung **(80)** mittels eines separat zu betätigenden Schalters, eines die Grenzgeschwindigkeit zu überwachenden Reglers, eines zu betätigenden Gaspedals oder eines Sensors erfolgt.

18. Rückhaltesystem nach mindestens einem der Ansprüche 1 bis 11, 16 und 17, **dadurch gekennzeichnet, daß** durch das Drücken der Generallösetaste **(84)** am Gurtschloß **(9.1)** alle Schloßzungen des Sicherheitsgurtes **(1d, 1e)** in den Gurtschlössern entriegelt sind und die Antriebseinrichtung **(80)** den Schulter- und/oder Halshalter **(10d, 10e)** von der Betriebsstellung in die Ruhestellung verfährt.

19. Rückhaltesystem nach Anspruch 2, **dadurch gekennzeichnet, daß** die Schale des Schulter- und Halshalters **(10a, 10c)** einstückig ausgebildet ist.

20. Rückhaltesystem nach Anspruch 19, **dadurch gekennzeichnet, daß** die Schale des Schulter- und Halshalters **(10a)** durch eine Verbindungsschale **(10.11)** versteift ist.

21. Rückhaltesystem nach mindestens einem der Ansprüche 1 bis 10, **dadurch gekennzeichnet, daß** ein herausnehmbares Vorderteil des Sitzkisseus **(3.1a)** als Halter **(10a)** ausgebildet ist und die dafür vorgesehene Aussparung des Sitzkissens **(3.1a)** für die Unterbringung beider Füße eines auf dem Hinterteil sitzenden Kindes vorgesehen ist.

22. Rückhaltesystem nach mindestens einem der Ansprüche 1 bis 11, **dadurch gekennzeichnet, daß** der Gurtabschnitt **(1.1, 1.2)** von
- einer geschlossenen Aussparung der Schulterschale **(10.2)** und einer geschlossenen Aussparung der Schloßzunge **(10.1);** oder
- einer U-formigen Platte **(10.15)** der Schulterschale **(10.2d, 10.2e);** oder
- einer offenen Aussparung **(10.14)** der Schulterschale **(10.2b, 10.2c)** und einer offenen Aussparung der Schloßzunge **(10.1b)** lose geführt ist.

23. Rückhaltesystem nach Anspruch 22, **dadurch gekennzeichnet, daß** der an der Aussparung der Schloßzunge **(10.1b)** oder an der U-förmigen Aussparung der Platte **(10.15)** angeordnete Gurtabschnitt **(1.1, 1.2)** durch eine Sperrung mittels eines Schnellsperrstiftes **(10.10)** lose arretiert ist und durch ein Ziehen des Schnellsperrstiftes herausnehmbar ist.

24. Rückhaltesystem nach mindestens einem der Ansprüche 1 bis 6, **dadurch gekennzeichnet, daß** die Schulterschale **(10.2, 10.2f)** durch ein Verdrehen einer Schraube **(10.7, 10.6a)** im Gewiudeloch eines Flansches **(10.12, 10.12f)** in Höhe und/oder Breite verstellbar ist.

25. Rückhaltesystem nach mindestens einem der Ansprüche 1 bis 11, 16 und 17, **dadurch gekennzeichnet, daß** durch ein Drücken einer am Sitzkissen **(3.1a bis 3.1e)** angeordneten Drucktaste **(84o)**
- das Paar Schloßzungen **(10.1, 10.1b, 10.1f)** des Schulter- und Halshalters **(10, 10a bis 10c)** in den Gurtschlössern **(18a / 19a bis 18n / 19n)** entriegelt ist; oder
- die Antriebseinrichtung **(80)** den Schulter- und/oder Halshalter **(10d, 10e)** von der Betriebsstellung in die Ruhestellung verfährt.

26. Rückhaltesystem nach mindestens einem der vorgenannten Ansprüche, **dadurch gekennzeichnet, daß**
a) am Sitzrahmen **(3.3a bis 3.3e**) ein Gurtschloß **(4a bis 4c, 8, 8a, 9.1)** zur Aufnahme einer Schloßzunge **(9, 11, 25)** angeorduet ist;
b) welche am Gurtabschnitt **(1.3a bis 1.3e)** bewegbar ist;
c) wobei das Gurtschloß **(4a bis 4c, 8, 8a, 9.1)** mit mindestens einem Energieabsorber **(30, 40, 40e, 40f, 50)** mittels mindestens eines Seiles **(37, 47, 47e, 47f, 57)** verbunden ist.

27. Rückhaltesystem nach mindestens einem der vorgenannten Ansprüche, **dadurch gekennzeichnet, daß** mindestens ein Gurtschloß **(4, 4a bis 4c, 18a, 18b, 19a, 19b)**
a) an dem Rückenlehnenrahmen **(3.4a to 3.4e)** angeordnet ist und
b) mit mindestens einem Energieabsorber **(30, 40, 40e, 40f, 50)** mittels mindestens eines Seiles **(37, 47, 47e, 47f, 57)** verbunden ist.

28. Rückhaltesystem nach Anspruch 26 oder 27, **dadurch gekennzeichnet, daß** der Energieabsorber **(30, 40, 40e, 40f, 50)** mindestens ein Spannelement **(32, 32.1 bis 32.n, 42, 42.1 bis 42.n, 42e, 42f, 52, 52.1 bis 52.n)** und ein Halteelement **(31, 41, 41e, 41f, 51)** umfaßt, das
- an dem Rückenlehnenrahmen **(3.4a to 3.4e)** oder Sitzrahmen **(3.3a bis 3.3e)** befestigt ist; oder
- ein Bestandteil des Rückenlehnenrahmens **(3.4a to 3.4e)** oder Sitzrahmens **(3.3a bis 3.3e)** ist.

29. Rückhaltesystem nach Anspruch 28, **dadurch gekennzeichnet, daß** das Spannelement **(32, 32.1 bis 32.n, 42, 42.1 bis 42.n, 42e, 42f, 52, 52.1 bis 52.n)** ein offenes und rohrförmiges Profil aufweist.

30. Rückhaltesystem nach Anspruch 28, **dadurch gekennzeichnet, daß** das Halteelement **(31, 41, 41e, 41f, 51)** rohrförmig ausgebildet ist.

31. Rückhaltesystem nach Anspruch 30, **dadurch gekennzeichnet, daß** am Halteelement **(41, 41e, 41f, 51)** ein Längssteg **(41.1, 51.1)** angeordnet ist.

32. Rückhaltesystem nach Ansprüchen 29 und 31, **dadurch gekennzeichnet, daß** die gegenüberliegenden Kanten des Spannelements **(42, 42.1 bis 42.n, 42e, 42f, 52, 52.1 bis 52.n)** vom Längssteg **(41,1, 51.1)** in Längsrichtung lose geführt sind.

33. Rückhaltesystem nach Anspruch 31, **dadurch gekennzeichnet, daß** am Längssteg **(41.1, 51.1)** mindestens ein Sperrelement **(41.3)** befestigt ist.

34. Rückhaltesystem nach mindestens einem der Ansprüche 31 bis 33, **dadurch gekennzeichnet, daß** die Dicke des Längssteges **(41.1, 51.1)** in Längsrichtung zunimmt.

35. Rückhaltesystem nach mindestens einem der Ansprüche 29 bis 34, **dadurch gekennzeichnet, daß** das Spannelement **(52,52.1 bis 52.n)** konusförmig ausgebildet ist.

36. Rückhaltesystem nach mindestens einem der Ansprüche 30 bis 35, **dadurch gekennzeichnet, daß** das Halteelement **(51)** konusförmig ausgebildet ist.

37. Rückhaltesystem nach mindestens einem der Ansprüche 29 bis 36, **dadurch gekennzeichnet, daß** das am Halteelement **(31, 41, 41e, 41f, 51)** vorgespannt angeordnete Spannelement **(32, 32.1 bis 32.n, 42, 42.1 bis 42.n, 42e, 42f, 52, 52.1 bis 52.n)** mit Sollbruchstellen (s) versehen ist.

38. Rückhaltesystem nach mindestens einem der Ansprüche 29 bis 36, **dadurch gekennzeichnet, daß** quer zur Längsrichtung des Halteelements **(31, 41, 41e, 41f, 51)** mindestens ein Sperrstift **(46, 46.1 bis 46.n)** angeordnet ist, der die Bewegung des zugehörigen Spannelements **(42, 42.1** bis **42.n)** sperrt, wodurch die Sollbruchstellen (s) bei Überschreitung der Grenzwerte gebrochen sind.

39. Rückhaltesystem nach mindestens einem der Ansprüche 30 bis 38, **dadurch gekennzeichnet, daß** die Berührungsflächen des Halteelements **(31, 41, 41e, 41f, 51)** beliebige Reibungskoeffizienten (µₙ) aufweisen.

40. Rückhaltesystem nach mindestens einem der Ansprüche 30 bis 39, **dadurch gekennzeichnet, daß** die Berührungsflächen des Halteelements **(31, 41, 41e, 41f, 51)** mit einem geräuschdämpfenden Material **(83)** versehen sind.

41. Rückhaltesystem nach mindestens einem der Ansprüche 29 bis 40, **dadurch gekennzeichnet, daß** die Berührungsflächen des Spannelements **(32, 32.1 bis 32.n, 42, 42.1 bis 42.n, 42e, 42f, 52, 52.1 bis 52.n)** beliebige Reibungskoeffizienten (µₙ) aufweisen.

42. Rückhaltesystem nach mindestens einem der Ansprüche 29 bis 41, **dadurch gekennzeichnet, daß** die Berührungsflächen des Spannelements **(32, 32.1 bis 32,n, 42, 42.1 bis 42.n, 42e, 42f, 52, 52.1 bis 52.n)** mit einem geräuschdämpfenden Material **(83)** versehen sind.

43. Rückhaltesystem nach mindestens einem der Ansprüche 29 bis 42, **dadurch gekennzeichnet, daß** zwei Kanten **(37c1)** des Spannelements **(32)** zur Aufnahme der Endabschnitte eines Hilfsseiles **(37a1)** ausgeformt sind, wobei das Hilfsseil **(37a1)** mit dem Seil **(37)** verbunden und durch ein Festklemmen der Enden beider Endabschnitte mittels Klammern **(37b1)** oder durch ein Festklemmen beider Kanten **(37c1)** samt beiden Endabschnitten gesichert ist.

44. Rückhaltesystem nach mindestens einem der Ansprüche 29 bis 42, **dadurch gekennzeichnet, daß** das Spannelement **(42, 42.1 bis 42.n, 42e, 42f, 52, 52.1 bis 52.n)** mit abstehenden Stegen versehen ist, in denen mehrere Paare Einstellöcher (L₁ bis Lₑ) angeordnet sind.

45. Rückhaltesystem nach mindestens einem der Ansprüche 26 bis 44, **dadurch gekennzeichnet, daß** ein Energieabsorbersatz **(30, 40, 40e, 40f, 50)** mit dem Seil **(37, 47, 47e, 47f, 57)** gebildet ist, und zwar aus dem Halteelement **(31, 41, 41e, 41f, 51),** mindestens einem Sperrstift **(46, 46.1 bis 46.n),** mindestens einem Sperrelement **(41.3)** und aus mehreren, mit oder ohne Sollbruchstellen (s) versehenen Spannelementen **(32, 32.1 bis 32.n, 42, 42.1 bis 42.n, 42.e, 42.f, 52, 52.1 bis 52.n)**, die entlang dem Halteelement **(31, 41, 41e, 41f, 51)** mittels der zugehörigen Seile **(37, 37.1 bis 37.n, 47, 47.1 bis 47.n, 47e, 47f, 57, 57.1 bis 57.n)** miteinander stramm, weniger stramm oder lose verbunden sind.

46. Rückhaltesystem nach Anspruch 45, **dadurch gekennzeichnet, daß** eine Energieabsorptionseinrichtung ein Verbindungsteil **(1.2a, 1.2b)** für einen oder mehrere Energieabsorbersätze **(30, 40, 40e, 40f, 50)** aufweist, deren Seile **(37, 47, 47e, 47f, 57)** mit dem Verbindungsteil **(1.2a, 1.2b)** stramm, weniger stramm oder lose verbunden sind.

47. Rückhaltesystem nach Anspruch 46, **dadurch gekennzeichnet, daß** am Sitzrahmen **(3.3a bis 3.3e)** oder Rückenlehnenrahmen **(3.4a bis 3.4e)** ein Leitblech **(4.7a, 4.7b)** befestigt ist,
a) dessen Einrastzungen **(4.10a, 4.10b)** mit einem Paar Aussparungen eines Gehäuses **(4.8a, 4.8b)** des Gurtschlosses **(4a, 4b)** formschlüssig verbunden sind und
b) dessen Aussparung **(4.5a)** oder dessen Längsnut **(4.5b)** fiir lose Führung eines Zugbandes **(1.1a, 1.1b)**, dessen erstes Ende mit dem Gurtschloß **(4a, 4b)** und dessen anderes Ende mit dem Verbindungsteil **(1.2a, 1.2b)** verbunden ist, vorgesehen ist.

48. Rückhaltesystem nach Anspruch 46, **dadurch gekennzeichnet, daß** ein entlang einem Paar Rohren **(27.3)** des Rückenlehnenrahmens **(3.4a bis 3.4e)** oder Sitzrahmens **(3.3a bis 3.3e)** verschiebbares und verriegelbares Gehäuse **(4.8c)**
a) eine Aussparung zur Aufnahme einer Einrastzunge **(4.10c)** des Gurtschlosses **(4c),** durch dessen Loch **(2.3)** ein Seil durchgesteckt ist, dessen beide Endabschnitte als Zugbänder **(1.5, 1.6)** durch eine Klammer **(1.7)** gesichert sind; und
b) zwei Löcher **(4.5c)** für lose Führung der Zugbänder **(1.5, 1.6),** die mit den Verbindungsteilen **(1.2a, 1.2b)** verbunden sind;
aufweist.

49. Rückhaltesystem nach mindestens einem der vorgenannten Ansprüche, **dadurch gekennzeichnet, daß** Metalle, Verbundmaterialien, faserverstärkte oder nichtmetallische Werkstoffe für das Material des Schulterhalters, Halshalters und Energieabsorbersatzes verwendet sind.

## Claims

1. A retainer device with shoulder arrester for transport systems to increase survival chance in accidents thereof or during turbulence-related vibrations of an aeroplane, wherein
a) the body of a passenger is restrained by a seat belt **(1a to 1e)** and the pair of shoulders by a shoulder arrester **(10, 10a to 10f)**;
b) which is attached rotatably or insertably to or in a seat backrest **(3.2a to 3.2e)** and
c) over which the seat belt **(1a to 1e)** is extended.

2. A retainer device with a shoulder- and neck arrester according to claim 1, wherein the pair of shoulders and the neck are restrained by a shoulder- and neck arrester **(10, 10a to 10f)**, defined by
a) a cap **(10.2a, 10.2c)** of the shoulder arrester **(10, 10a to 10f)** and a cap **(10.4a, 10.4c)** of a neck arrester or
b) a pair of caps **(10.2, 10.2b, 10.2d to 10.2f)** of the shoulder arrester and a pair of caps **(10.4, 10.4b)** of a neck arrester.

3. A retainer device according to claim 2, wherein the pair of neck caps **(10.4, 10.4b)** is insertably connected to the pair of shoulder caps **(10.2, 10.2b, 10.2d to 10.2f)** and detachable therefrom.

4. A retainer device according to at least one of the preceding claims, wherein the shoulder- and/or neck arrester **(10, 10a to 10f)** is provided with at least one energy absorber **(10.3, 10.3a, 10.5, 10.5a, 10.5c, 10.9)**.

5. A retainer device according to claim 4, wherein the energy absorber **(10.3, 10.3a, 10.5, 10.5a, 10.5c)** is fastened to the shoulder- and/or neck cap **(10.2, 10.2a to 10.2f, 10.4, 10.4a to 10.4c, 10.4f)** by an adhesive fastener such as zip-, snap-in-, Velcro fastener and detachable therefrom by opening the fastener.

6. A retainer device according to at least one of the preceding claims, wherein the shoulder caps **(10.2, 10.2a to 10.2f)** are shoulder-shaped.

7. A retainer device according to at least one of claims 4 to 6, wherein the energy absorber **(10.3, 10.3a)** is shoulder-shaped.

8. A retainer device according to at least one of claims 2 and 5, wherein the neck cap **(10.4, 10.4a to 10.4c)** is neck-shaped.

9. A retainer device according to at least one of claims 4, 5 and 8, wherein the energy absorber **(10.5, 10.5a, 10.5c)** is neck-shaped.

10. A retainer device according to at least one of claims 8 and 9, wherein the energy absorber **(10.5a)**, arranged in the neck cap **(10.4a),** serves as a neck collar having a wide portion for the chin.

11. A retainer device according to at least one of the preceding claims, wherein buckle assemblies, to which a pair of latch plates **(10.1, 10.1b, 10.1f)** of the shoulder- and neck arrester **(10, 10a to 10c, 10f)** is connected, are attached **to** a seat backrest frame **(3.4a to 3.4c).**

12. A retainer device according to at least one of the preceding claims, wherein all latch plates of the seat belt **(1a to 1c)** and the shoulder- and neck arrester **(10, 10a to 10c, 10f)** are disengaged from the buckle assemblies upon the pressure on a master release button **(84)** of the buckle assembly **(9.1)**.

13. A retainer device according to claim 12, wherein the shoulder- and/or neck arrester **(10, 10a, 10b)** is fastened to the seat backrest **(3.2c)** or seat cushion **(3.1a, 3.1b)** for the purpose. of storage and detachable therefrom upon the pressure on a release button **(87a to 87c).**

14. A retainer device according to at least one of claims 1 to 10, wherein the shoulder- and/or neck arrester **(10d, 10e)** is provided with a manually operated or motor-driven rotatable device **(28, 28a),** which is height-adjustable and/or rotatably attached to a seat backrest frame **(3.4d, 3.4e).**

15. A retainer device according to claim 14, wherein the cap **(10.2d, 10.2e),** recessed about the supporting tube **(3.61)** of the head rest **(3.6),** is reinforced by a reinforcing plate **(10.13).**

16. A retainer device according to at least one of claims 14 and 15, wherein a drive apparatus **(80)** rotates the shoulder- and/or neck arrester **(10d, 10e)** about both shoulders of the passenger from the resting position **(P)** to the operating position **(P**_{**1**}**).**

17. A retainer device according to claim 16, wherein the drive apparatus **(80)** is activated by a separately operated switch, a governor controlling the limitation of speed, an accelerator pedal or a sensor.

18. A retainer device according to at least one of claims 1 to 11, 16 and 17, wherein when the master release button **(84)** of the buckle assembly **(9.1)** is pressed, all latch plates of the seat belt **(1d, 1e)** are disengaged from the buckle assemblies and the drive apparatus **(80)** moves the shoulder and/or neck arrester **(10d, 10e)** back from the operating position (P₁) to the resting position **(P).**

19. A retainer device according to claim 2, wherein the cap of the shoulder- and neck arrester **(10a, 10c)** is made of one piece.

20. A retainer device according to claim 19, wherein the cap of the shoulder- and neck arrester **(10a)** is reinforced by a connecting cap **(10.11).**

21. A retainer device according to at least one of claims 1 to 10, wherein a removable front portion of the seat cushion **(3.1a)** serves as an arrester **(10a)** and the space thereof is exploited to accommodate the legs of a child sitting on the rear portion thereof.

22. A retainer device according to at least one of claims 1 to 11, wherein the belt portion **(1.1, 1.2)** is loosely guided by
- a closed aperture of the shoulder cap **(10.2)** and a closed aperture ofthe latch plate **(10.1)**; or
- a U-shaped plate **(10.15)** of the shoulder cap **(10.2d, 10.2e);** or
- an open aperture **(10.14)** of the shoulder cap **(10.2b, 10.2c)** and an open aperture of the latch plate **(10.1b).**

23. A retainer device according to claim 22, wherein the belt portion **(1.1, 1.2),** extending over the aperture of the latch plate **(10.1b)** or the U-shaped plate **(10.15),** is loosely secured by a quick-release pin **(10.10)** and releasable by withdrawal thereof.

24. A retainer device according to at least one of claims 1 to 6, wherein the shoulder cap **(10.2, 10.2f)** is height- and/or width-adjustable by rotating a bolt **(10.7, 10.6a)** in the threaded hole of a flange **(10.12, 10.12f)**.

25. A retainer device according to at least one of claims 1 to 11, 16 and 17, wherein when a master release button **(84o),** arranged to the seat cushion **(3.1a to 3.1e)**, is pressed,
- the pair of latch plates **(10.1, 10.1b, 10.1f)** of the shoulder- and neck arrester **(10, 10a to 10c)** are disengaged from the buckle assemblies **(18a / 19a to 18n / 19n)** or
- the drive apparatus **(80)** moves the shoulder arrester **(10d, 10e)** back from the operating position (P₁) to the resting position (P).

26. A retainer device according to at least one of the preceding claims, wherein
a) a buckle assembly **(4a to 4c, 8, 8a, 9.1)** is arranged to a seat frame **(3.3a to 3.3e)** to receive a latch plate (9, 11, 25);
b) which is moveable along the belt portion (1.3a to 1.3e);
c) where the buckle assembly (4a to 4c, 8, 8a, 9.1) is connected to at least one energy absorber (30, 40, 40e, 40f, 50) by means of at least one wire (37, 47, 47e, 47f, 57).

27. A retainer device according to at least one of the preceding claims, wherein at least one buckle assembly **(4, 4a to 4c, 18a, 18b, 19a, 19b)** is
a) arranged to the seat backrest frame **(3.4a to 3.4e)** and
b) connected to at least one energy absorber **(30, 40, 40e, 40f, 50)** by means of at least one wire **(37, 47, 47e, 47f, 57).**

28. A retainer device according to claim 26 or 27, wherein the energy absorber (30, 40, 40e, **40f, 50)** comprises at least one clamping element **(32, 32.1 to 32.n, 42, 42.1 to 42.n, 42e, 42f, 52, 52.1 to 52.n)** and a retaining element **(31, 41, 41e, 41f, 51),** which
- is fastened to the seat backrest frame **(3.4a to 3.4e)** or seat frame **(3.3a to 3.3e);** or
- is integral part thereof.

29. A retainer device according to claim 28, wherein the clamping element **(32, 32.1 to 32.n, 42, 42.1 to 42.n, 42e, 42f, 52, 52.1 to 52.n)** has open and tube-shaped profile.

30. A retainer device according to claim 28, wherein the retaining element (31, 41, 41e, 41f, 51) is tube-shaped.

31. A retainer device according to claim 30, wherein a longitudinal rib **(41.1, 51.1)** is arranged to the retaining element **(41, 41e, 41f,** 51).

32. A retainer device according to claims 29 and 31, wherein both edges of the clamping element **(42, 42.1 to 42.n, 42e, 42f, 52, 52.1 to 52.n)** are loosely guided by the longitudinal rib **(41.1, 51.1)** in longitudinal direction.

33. A retainer device according to claim 31, wherein at least one stop element **(41.3)** is arranged to the longitudinal rib **(41.1, 51.1).**

34. A retainer device according to at least one of claims 31 to 33, wherein the thickness of the longitudinal rib **(41.1, 51.1)** increases in longitudinal direction.

35. A retainer device according to at least one of claims 29 to 34, wherein the clamping element **(52, 52.1 to 52.n)** is cone-shaped.

36. A retainer device according to at least one of claims 30 to 35, wherein the retaining element **(51)** is cone-shaped.

37. A retainer device according to at least one of claims 29 to 36, wherein the clamping element **(32, 32.1 to 32.n, 42, 42.1 to 42.n, 42e, 42f, 52, 52.1 to 52.n),** pre-tensioned and arranged along the retaining element **(31, 41, 41e, 41f, 51),** is provided with sites of predetermined fracture (s), which have at least one threshold value.

38. A retainer device according to at least one of claims 29 to 36, wherein at least one stop pin **(46, 46.1 to 46.n)** is laterally arranged to the retaining element **(31, 41, 41e, 41f, 51),** where the pin blocks the movement of the clamping element **(42, 42.1** to **42.n)**, thus resulting in fracture of the sites of predetermined fracture (s) when the threshold value is exceeded.

39. A retainer device according to at least one of claims 30 to 38, wherein the contact surfaces of the retaining element **(31, 41, 41e, 41f, 51)** have arbitrary friction coefficients (µ₀).

40. A retainer device according to at least one of claims 30 to 39, wherein the contact surfaces of the retaining element **(31, 41, 41e, 41f, 51)** are provided with a soundproofing material **(83).**

41. A retainer device according to at least one of claims 29 to 40, wherein the contact surfaces of the clamping element **(32, 32.1 to 32.n, 42, 42.1 to 42.n, 42e, 42f, 52, 52.1 to 52.n**) have arbitrary friction coefficients (µ₀).

42. A retainer device according to at least one of claims 29 to 41, wherein the contact surfaces of the clamping element **(32, 32.1 to 32.n, 42, 42.1 to 42.n, 42e, 42f, 52, 52.1 to 52.n)** are provided with a soundproofing material **(83).**

43. A retainer device according to at least one of claims 29 to 42, wherein the end portions of an auxiliary wires **(37a1),** connected to a wire **(37)**, are inserted into both cylinder-shaped edges **(37c1)** of the clamping elements **(32)** and secured by clamping the edges **(37c1)** with the end portions or by clamping two brackets **(37b1)** to the termini thereof.

44. A retainer device according to at least one of claims 29 to 42, wherein the clamping element **(42, 42.1 to 42.n, 52, 52.1 to 52.n)** is provided with a pair of ribs, whereto several pairs of adjusting holes (L₁ to Lₑ) are arranged.

45. A retainer device according to at least one of claims 26 to 44, wherein a set of energy absorbers **(30, 40, 40e, 40f, 50),** equipped with the wire **(37, 47, 47e, 47f, 57),** comprises the retaining element **(31, 41, 41e, 41f, 51),** at least one stop pin **(46, 46.1 to 46.n)**, at least one stop element **(41.3)** and several clamping elements **(32, 32.1 to 32.n, 42, 42.1 to 42.n, 42e, 42f, 52, 52.1 to 52.n)** with/without sites of predetermined fracture (s), where clamping elements, arranged along the retaining element **(31, 41, 41e, 41f, 51),** are tautly, less tautly or loosely connected to each other by means of wires **(37, 37.1 to 37.n, 47, 47.1 to 47.n, 47e, 47f, 57, 57.1 to 57.n).**

46. A retainer device according to claim 45, wherein an energy absorbing device comprises a couple member **(1.2a, 1.2b)** and one or several sets of energy absorbers **(30, 40, 40e, 40f, 50)**, the wires **(37, 47, 47e, 47f, 57)** of which are tautly, less tautly or loosely connected to the couple member **(1.2a, 1.2b).**

47. A retainer device according to claim 46, wherein a guide piece **(4.7a, 4.7b)** is fastened to the seat frame **(3.3a to 3.3e)** or seat backrest frame **(3.4a to 3.4e),** where the guide piece has
a) a pair of engaging parts **(4.10a, 4.10b)**, form-locking connected to the respective apertures of a housing **(4.8a to 4.8c)** of the buckle assembly **(4a, 4b);** and
b) a recess **(4.5a)** or longitudinal groove **(4.5b)** to loosely guide a tie band **(1.1a, 1.1b)**, one end of which is connected to the buckle assembly **(4a, 4b)** and the other end to the couple member **(1.2a, 1.2b)**.

48. A retainer device according to claim 46, wherein a housing **(4.8c)**, movable along a pair of tubes **(27.3)** of the seat backrest frame **(3.4a to 3.4e)** or seat frame **(3.3a to 3.3e)** and latchable thereon, has
a) an aperture to receive an engaging part **(4.10c)** of the buckle assembly **(4c),** through a hole **(2.3)** of which a wire is protruded and both end portions of the wire, serving as tie bands **(1.5, 1.6)**, are secured by a bracket **(1.7);** and
b) two holes **(4.5c)** to loosely guide the tie bands **(1.5, 1.6),** connected to the couple members **(1.2a, 1.2b)**.

49. A retainer device according to at least one of the preceding claims, **characterized by** use of metal, compound material, fibre reinforced material or non-metal material for material of the parts of the shoulder- arrester, neck arrester and set of energy absorbers.

## Revendications

1. Dispositif de retenue avec un ensemble retenant les épaules qui est destiné à augmenter la sécurité des passagers d'un véhicule automobile, train ou avion en cas d'accident, **caractérisé en ce que** le corps du passager est retenu par une ceinture de sécurité **(1a à 1e)** et que:
a) les deux épaules sont retenues par un ensemble retenant les épaules **(10, 10a à 10f);**
b) ledit ensemble étant fixé basculant ou enfichable à un dossier **(3.2a à 3.2e),** et:
c) la ceinture de sécurité **(1a à 1e)** étant disposée sur ledit ensemble retenant les épaules.

2. Dispositif de retenue selon la revendication 1, **caractérisé en ce que** les deux épaules et le cou sont retenus par un ensemble destiné à cet effet **(10, 10a à 10f),** ledit ensemble retenant les épaules et le cou étant composé des éléments suivants:
a) d'un baquet de cou **(10.4a, 10.4c)** et d'un baquet d'épaules **(10.2a, 10.2c);** ou:
b) d'une paire de baquets de cou **(10.4, 10.4b)** et d'une paire de baquets d'épaules **(10.2, 10.2b, 10.2d à 10.2f).**

3. Dispositif de retenue selon la revendication 2, **caractérisé en ce que** la paire de baquets de cou **(10.4, 10.4b)** est reliée à la paire de baquets d'épaules **(10.2, 10.2b, 10.2d à 10.2f)** de façon enfichable et peut être démontée.

4. Dispositif de retenue selon au moins une des revendications ci-devant, **caractérisé en ce que** l'ensemble retenant les épaules et/ou le cou **(10, 10a à 10f)** est muni d'au moins un absorbeur d'énergie **(10.3, 10.3a, 10.5, 10.5a, 10.5c, 10.9).**

5. Dispositif de retenue selon la revendication 4, **caractérisé en ce que** l'absorbeur d'énergie **(10.3, 10.3a, 10.5, 10.5a, 10.5c)** est fixé au baquet d'épaules et/ou baquet de cou **(10.2, 10.2a à 10.2f, 10.4, 10.4a à 10.4c, 10.4f)** par une fermeture adhésive, éclair ou Velcro et peut être démonté en ouvrant ladite fermeture.

6. Dispositif de retenue selon au moins une des revendications ci-devant, **caractérisé en ce que** le baquet d'épaules **(10.2, 10.2a à 10.2f)** est adapté à la forme des épaules.

7. Dispositif de retenue selon au moins une des revendications 4 à 6, **caractérisé en ce que** l'absorbeur d'énergie **(10.3, 10.3a)** est adapté à la forme des épaules.

8. Dispositif de retenue selon au moins une des revendications 2 et 5, **caractérisé en ce que** le baquet de cou **(10.4, 10.4a à 10.4c)** est adapté à la forme du cou.

9. Dispositif de retenue selon au moins une des revendications 4, 5 et 8, **caractérisé en ce que** l'absorbeur d'énergie **(10.5, 10.5a, 10.5c)** est adapté à la forme du cou.

10. Dispositif de retenue selon au moins une des revendications 8 et 9, **caractérisé en ce que** l'absorbeur d'énergie **(10.5a)** situé dans le baquet de cou **(10.4a)** a la forme d'une collerette à large soutien pour le menton.

11. Dispositif de retenue selon au moins une des revendications ci-devant, **caractérisé en ce que** des boucles de fermeture d'une ceinture de sécurité sont disposées sur le cadre d'un dossier **(3.4a à 3.4c)** auxquelles l'ensemble retenant les épaules et le cou **(10, 10a à 10c, 10f)** est relié par le biais de languettes de fermeture **(10.1, 10.1b, 10.1f)**.

12. Dispositif de retenue selon au moins une des revendications ci-devant, **caractérisé en ce qu'**en appuyant sur une touche de déverrouillage général **(84)** située sur la boucle de fermeture **(9.1)** toutes les languettes de fermetue de la ceinture de sécurité **(1a à 1c)** et de l'ensemble retenant les épaules et le cou **(10, 10a à 10c, 10f)** sont relâchées des boucles respectives.

13. Dispositif de retenue selon la revendication 12, **caractérisé en ce que** l'ensemble retenant les épaules et le cou **(10, 10a, 10b)** est fixé au dossier **(3.2c)** ou à la zone d'assise du siège **(3.1a, 3.1b)** pour le ranger et peut être enlevé en appuyant sur une touche de déverrouillage **(87a à 87c).**

14. Dispositif de retenue selon au moins une des revendications 1 à 10, **caractérisé en ce que** l'ensemble retenant les épaules et/ou le cou **(10d, 10e)** est muni d'un dispositif de basculement à actionnement manuel ou motorisé **(28, 28a)** fixé de façon basculante sur le cadre d'un dossier **(3.4d, 3.4e)** et/ou dont la hauteur peut être ajustée.

15. Dispositif de retenue selon la revendication 14, **caractérisé en ce que** le baquet d'épaules **(10.2d, 10.2e)** constitué par un évidement autour d'un tuyau d'appui **(3.61)** de l'apui-tête **(3.6)** est muni d'un baquet de renforcement **(10.13)**.

16. Dispositif de retenue selon au moins une des revendications 14 et 15, **caractérisé en ce qu'**un dispositif d'actionnement **(80)** fait basculer l'ensemble retenant les épaules et/ou le cou **(10d, 10e)** d'une position de repos (P) à une position de service (P₁), et ce autour des deux épaules du passager.

17. Dispositif de retenue selon la revendication 16, **caractérisé en ce que** le dispositif d'actionnement **(80)** est déclenché par le biais d'un disjoncteur à actionnement séparé, d'un asservisseur contrôlant la vitesse limite, d'un accélérateur à actionnement séparé ou d'un senseur.

18. Dispositif de retenue selon au moins une des revendications 1 à 11, 16 et 17, **caractérisé en ce que**, en appuyant sur la touche de déverrouillage général **(84)** situé sur la boucle de fermeture **(9.1),** toutes les languettes de fermeture de la ceinture de sécurité **(1d, 1e)** sont déverrouillées dans les boucles respectives et que le dispositif d'actionnement **(80)** déplace l'ensemble retenant les épaules et/ou le cou **(10d, 10e)** d'une position de service à une position de repos.

19. Dispositif de retenue selon la revendication 2, **caractérisé en ce que** le baquet de l'ensemble retenant les épaules et le cou **(10a, 10c)** est d'un seul tenant.

20. Dispositif de retenue selon la revendication 19, **caractérisé en ce que** le baquet de l'ensemble retenant les épaules et le cou **(10a)** est etayé par un baquet de liaison **(10.11)**.

21. Dispositif de retenue selon au moins une des revendications 1 à 10, **caractérisé en ce qu'**une partie avant amovible de la zone d'assise du siège **(3.1a)** forme un ensemble **(10a)** et que l'évidement prévu à cet effet dans la zone d'assise du siège **(3.1a)** sert à loger les deux pieds d'un enfant assis sur la partie arrière de ladite zone d'assise.

22. Dispositif de retenue selon au moins une des revendications 1 à 11, **caractérisé en ce que** le brin de sangle **(1.1, 1.2)** est guidé de façon lâche par les éléments suivants:
- un évidement fermé du baquet d'épaules **(10.2)** et un évidement fermé de la languette de fermeture **(10.1);** ou:
- une plaque en U **(10.15)** du baquet d'épaules **(10.2d, 10.2e);** ou:
- un évidement ouvert **(10.14)** du baquet d'épaules **(10.2b, 10.2c)** et un évidement ouvert de la languette de fermeture **(10.1b).**

23. Dispositif de retenue selon la revendication 22, **caractérisé en ce que** le brin de sangle **(1.1, 1.2)** disposé sur l'évidement de la languette de fermeture **(10.1b)** ou sur l'évidement en U de la plaque **(10.15)** est arrêté de façon lâche grâce à un blocage par une broche de déclic rapide **(10.10)** et peut être enlevé en retirant ladite broche.

24. Dispositif de retenue selon au moins une des revendications 1 à 6, **caractérisé en ce que** le baquet d'épaules **(10.2, 10.2f)** peut être réglé en hauteur et/ou largeur en tournant une vis **(10.7, 10.6a)** dans le trou fileté d'une bride **(10.12, 10.12f)**.

25. Dispositif de retenue selon au moins une des revendications 1 à 11, 16 et 17, caractérisé en ce, en appuyant sur un bouton-poussoir **(84o)** disposé sur la zone d'assise du siège **(3.1a à 3.1e)**,
- la paire de languettes de fermeture **(10.1, 10.1b, 10.1f)** de l'ensemble retenant les épaules et le cou **(10, 10a à 10c)** est déverrouillée dans les boucles de fermeture **(18a / 19a à 18n / 19n)**; ou:
- le dispositif d'actionnement **(80)** déplace l'ensemble retenant les épaules et/ou le cou **(10d, 10e)** d'une position de service à une position de repos.

26. Dispositif de retenue selon au moins une des revendications ci-devant, **caractérisé en ce que**:
a) une boucle de fermeture **(4a à 4c, 8, 8a, 9.1)** destinée à recevoir une languette de fermeture **(9, 11, 25)** est disposée sur le cadre du siège **(3.3a à 3.3e);**
b) amovible sur le brin de sangle **(1.3a à 1.3e);**
c) la boucle de fermeture **(4a à 4c, 8, 8a, 9.1)** étant reliée à au moins un absorbeur d'énergie **(30, 40, 40e, 40f, 50)** par le biais d'au moins une corde **(37, 47, 47e, 47f, 57**).

27. Dispositif de retenue selon au moins une des revendications ci-devant, **caractérisé en ce qu'**au moins une boucle de fermeture **(4, 4a à 4c, 18a, 18b, 19a, 19b)**
a) est disposée sur le cadre du dossier **(3.4a to 3.4e)**,
b) étant reliée à au moins un absorbeur d'énergie **(30, 40, 40e, 40f, 50)** par le biais d'au moins une corde **(37, 47, 47e, 47f, 57).**

28. Dispositif de retenue selon la revendication 26 oder 27, **caractérisé en ce que** l'absorbeur d'énergie **(30, 40, 40e, 40f, 50)** comprend au moins un élément de serrage **(32, 32.1 à 32.n, 42, 42.1 à 42.n, 42e, 42f, 52, 52.1 à 52.n)** et un élément de retenue **(31, 41, 41e, 41f, 51),** ledit élément:
- étant fixé sur le cadre du dossier **(3.4a to 3.4e)** ou sur le cadre du siège **(3.3a à 3.3e);** ou:
- faisant partie du cadre du dossier **(3.4a to 3.4e)** ou du cadre du siège **(3.3a à 3.3e).**

29. Dispositif de retenue selon la revendication 28, **caractérisé en ce que** l'élément de serrage **(32, 32.1 à 32.n, 42, 42.1 à 42.n, 42e, 42f, 52, 52.1 à 52.n)** a un profil ouvert et en forme de tuyau.

30. Dispositif de retenue selon la revendication 28, **caractérisé en ce que** l'élément de retenue **(31, 41, 41e, 41f, 51)** a la forme d'un tuyau.

31. Dispositif de retenue selon la revendication 30, **caractérisé en ce qu'**une entretoise **(41.1, 51.1)** est disposée sur l'élément de retenue **(41, 41e, 41f, 51)**.

32. Dispositif de retenue selon les revendications 29 et 31, **caractérisé en ce que** les rebords opposés de l'élément de serrage **(42, 42.1 à 42.n, 42e, 42f, 52, 52.1 à 52.n)** sont guidés de façon lâche par l'entretoise longitudinale **(41.1, 51.1)**, et ce en sens longitudinaL

33. Dispositif de retenue selon la revendication 31, **caractérisé en ce qu'**au moins un élément de verrouillage **(41.3)** est fixé sur l'entretoise longitudinale **(41.1, 51.1).**

34. Dispositif de retenue selon au moins une des revendications 31 à 33, **caractérisé en ce qu'**épaisseur de ladite entretoise longitudinale **(41.1, 51.1)** augmente en sens longitudinaL

35. Dispositif de retenue selon au moins une des revendications 29 à 34, **caractérisé en ce que** l'élément de serrage **(52, 52.1** à **52.n)** a une forme conique.

36. Dispositif de retenue selon au moins une des revendications 30 à 35, **caractérisé en ce que** l'élément de retenue **(51)** a une forme conique.

37. Dispositif de retenue selon au moins une des revendications 29 à 36, **caractérisé en ce que** l'élément de serrage précontraint **(32, 32.1 à 32.n, 42, 42.1 à 42.n, 42e, 42f, 52, 52.1 à 52.n)** disposé sur l'élément de retenue **(31, 41, 41e, 41f, 51)** est muni de points destinés à la rupture (s).

38. Dispositif de retenue selon au moins une des revendications 29 à 36, **caractérisé en ce qu'**au moins une broche de déclic **(46, 46.1** à **46.n)** est disposée transversalement au sens longitudinal de l'élément de retenue **(31, 41, 41e, 41f, 51)** destinée à bloquer le mouvement de l'élément de serrage correspondant **(42, 42.1 à 42.n)**; une fois les valeurs limites dépassées, il y aura rupture aux points destinés à cet effet (s).

39. Dispositif de retenue selon au moins une des revendications 30 à 38, **caractérisé en ce que** les surfaces de contact de l'élément de retenue **(31, 41, 41e, 41f, 51)** présentent des coefficients de frottement (µₙ) quelconques.

40. Dispositif de retenue selon au moins une des revendications 30 à 39, **caractérisé en ce que** les surfaces de contact de l'élement de retenue **(31, 41, 41e, 41f, 51)** sont munies d'un matériau insonorisant **(83).**

41. Dispositif de retenue selon au moins une des revendications 29 à 40, **caractérisé en ce que** les surfaces de contact de l'élément de serrage **(32, 32.1 à 32.n, 42, 42.1 à 42.n**, **42e, 42f, 52, 52.1 à 52.n)** présentent des coefficients de frottement (µₙ) quelconques.

42. Dispositif de retenue selon au moins une des revendications 29 à 41, **caractérisé en ce que** les surfaces de contact de l'élément de serrage **(32, 32.1 à 32.n**, **42, 42.1 à 42.n, 42e, 42f, 52, 52.1 à 52.n)** sont munies d'un matériau insonorisant **(83).**

43. Dispositif de retenue selon au moins une des revendications 29 à 42, **caractérisé en ce que** deux rebords **(37c1)** de l'élément de serrage **(32)** ont une forme adéquate pour pouvoir y loger les brins terminaux d'une corde auxiliaire **(37a1),** ladite corde auxiliaire **(37a1)** étant reliée à la corde **(37),** le tout étant arrêté en serrant les extrémités des deux brins terminaux par des agraffes **(37b1)** ou en serrant les deux rebords **(37c1)**, y compris les deux brins terminaux.

44. Dispositif de retenue selon au moins une des revendications 29 à 42, **caractérisé en ce que** l'élément de serrage **(42, 42.1 à 42.n, 42e, 42f, 52, 52.1 à 52.n)** est muni d'entretoises saillantes dans lesquelles sont disposées plusieurs paires de trous de réglage (L₁ à Lₑ).

45. Dispositif de retenue selon au moins une des revendications 26 à 44, **caractérisé en ce qu'**un jeu d'absorbeurs d'énergie **(30, 40, 40e, 40f, 50)** est constitué avec la corde **(37, 47, 47e, 47f, 57),** comprenant notamment l'élément de retenue **(31, 41, 41e, 41f, 51),** au moins une broche à déclic **(46, 46.1 à 46.n)**, au moins un élément de blocage **(41.3)** et plusieurs éléments de serrage **(32, 32.1 à 32.n, 42, 42.1 à 42.n, 42.e, 42.f, 52, 52.1 à 52.n)**, munis ou non de points destinés à la rupture (s) et reliés entre eux le long de l'élément de retenue **(31, 41, 41e, 41f, 51)** à l'aide des cordes correspondantes **(37, 37.1 à 37.n, 47, 47.1 à 47.n, 47e, 47f, 57, 57.1 à 57.n)** de façon tendue, moins tendue ou lâche.

46. Dispositif de retenue selon la revendication 45, **caractérisé en ce qu'**un dispositif d'absorption d'énergie présente une pièce de jonction **(1.2a, 1.2b)** destinée à un ou plusieurs jeux d'absorbeurs d'énergie **(30, 40, 40e, 40f, 50)** dont les cordes **(37, 47, 47e, 47f, 57)** sont reliées à ladite pièce de jonction **(1.2a, 1.2b)** de façon tendue, moins tendue ou lâche.

47. Dispositif de retenue selon la revendication 46, **caractérisé en ce qu'**une tôle de guidage **(4.7a, 4.7b)** est fixé sur le cadre du siège **(3.3a à 3.3e)** ou le cadre du dossier **(3.4a à 3.4e)**,
a) dont les languettes d'encliquetage **(4.10a, 4.10b)** sont reliées à une paire d'évidements d'un boîtier **(4.8a, 4.8b)** de la boucle de fermeture **(4a, 4b)** de façon crabotée, et:
b) dont l'évidement **(4.5a)** ou la rainure longitudinale **(4.5b)** sont prévus pour le guidage lâche d'un ruban de traction **(1.1a, 1.1b)** dont la première extrémité est reliée à la boucle de fermeture **(4a, 4b)** et la deuxième extrémité à la pièce de jonction **(1.2a, 1.2b)**.

48. Dispositif de retenue selon la revendication 46, **caractérisé en ce qu'**un boîtier **(4.8c)** peut être glissé et verrouillé le long d'une paire de tuyaux **(27.3)** du cadre du dossier **(3.4a à 3.4e)** ou du cadre du siège **(3.3a à 3.3e),** ledit boîtier présentant les éléments suivants:
a) un évidement pour y loger une languette d'encliquetage **(4.10c)** de la boucle de fermeture **(4c),** une corde passant à travers le trou **(2.3)** de ladite boucle, dont les deux brins terminaux utilisés en tant que rubans de traction **(1.5, 1.6)** sont bloqués par des agraffes **(1.7);** et
b) deux trous **(4.5c)** pour guider de façon lâche les rubans de traction **(1.5, 1.6)** reliés aux pièces de jonction **(1.2a, 1.2b)**.

49. Dispositif de retenue selon au moins une des revendications ci-devant, **caractérisé en ce que** l'ensemble retenant les épaules, l'ensemble retenant le cou et le jeu d'absorbeurs d'énergie sont fabriqués en métal, matériaux composites, matériaux renforcés par des fibres ou matériaux non métalliques.
